# EUROPÄISCHE PATENTSCHRIFT

(11) **EP 4 560 977 B1**
(45) Veröffentlichungstag und Bekanntmachung des Hinweises auf die Patenterteilung: **02.09.2026**
(21) Anmeldenummer: 23211868.7
(22) Anmeldetag: 23.11.2023
(51) Int. Cl.: H04L 9/40

(54) **MOBILE INTERAKTIONSPLATTFORM**
MOBILE INTERACTION PLATFORM
PLATE-FORME D'INTERACTION MOBILE

(43) Veröffentlichungstag der Anmeldung: 28.05.2025
(73) Patentinhaber: DeGIV GmbH, 47475 Kamp-Lintfort (DE)
(72) Erfinder: SCHULTZ, Julian, 46047 Oberhausen (DE); RITTINGER, Dieter, 47495 Rheinberg (DE); BANGE, Swetlana, 46047 Oberhausen (DE); SCHWARZ, Andreas, 46119 Oberhausen (DE)
(74) Vertreter: Arth, Hans-Lothar

(56) Entgegenhaltungen:
- EP-A1- 2 267 968
- US-A1- 2012 311 659
- US-A1- 2013 248 601
- US-A1- 2015 242 663
- US-A1- 2022 116 404

## Beschreibung

Die vorliegende Erfindung betrifft System zur diskriminierungsfreien, sicheren und mobilen Bereitstellung digitaler Dienstleistungen eines Dienstleistungsanbieters über ein mobiles, manipulations- und diebstahlgesichertes Terminal an einen Benutzer umfassend ein mobiles, manipulations- und diebstahlgesichertes Terminal umfassend ein versiegeltes Gehäuse, ein Mobilfunkmodul mit einer eindeutigen Mobilfunkkennung und einer Geräteadresse, das so konfiguriert ist, dass es ausschließlich eine permanente, gesicherte, verschlüsselte, gekapselte und drahtlose Verbindung mit mindestens einem Server in einem Datenzentrum über einen privaten Zugangspunkt eingeht, ein in das versiegelte Gehäuse integriertes Kartenlesemodul, ein Touchscreen, ein Positionsbestimmungsmodul, und mindestens einen Server in einem Datenzentrum, der so konfiguriert ist, dass er die permanente, gesicherte, verschlüsselte und gekapselte Verbindung mit dem Terminal und den Betriebszustand des Terminals kontinuierlich überwacht.

Kostendruck und personelle Engpässe auch im Bereich der öffentlichen Verwaltung, Krankenkassen, medizinischen Einrichtungen oder anderen Institutionen erfordern zunehmend den Einsatz digitaler Lösungen. Verkürzte Geschäftszeiten in den verbliebenen Geschäftsstellen, reduzierte Personalausstattungen bei gleichzeitig zunehmender Prozesskomplexität oder flächendeckende Schließungen von bisherigen Zugangspunkten schränken Service und einen leichten Zugang zu Sozialleistungen, vor allem für "nicht-technik-affine" Bevölkerungsschichten, zum Teil auch wegen fehlender oder unzulänglicher Hardware, immer stärker ein. Gleichzeitig steigen die Angriffszahlen auf Smartphones und Digitalstrukturen stark an und werden mögliche, oft dennoch unzureichend Schutzmaßnahmen immer aufwendiger. Das verfassungsgemäße Recht auf diskriminierungsfreie informationelle Selbstbestimmung und der wirtschaftliche und prozessuale Bedarf der Institutionen nach einer "Aktivierung" und Befähigung der Teilhabe an digitalen Prozessen erfordert zukunftsfähige, sichere Kontaktmittel.

Die als "moderne Alternative" eingerichteten Internet-basierenden Geschäftsstellen über Apps für Smartphones, welche bereits heute der vor allem jüngeren Anwenderschicht zur Verfügung stehen, sind wie der heimische Digitalzugang (sofern eine solche technische Ausstattung als gegeben angenommen werden kann) unter Datenschutz- und Signaturaspekten als nicht ausreichend sicher anzusehen. Eine Verwendung dieser Hardware in Hotspots, WLAN-Umgebungen oder Programmänderungen durch nicht ausreichend geschützte Apps oder Links stehen einer Verwendung im hochsensiblen Sozialdatenumfeld verstärkt entgegen. Die Weitergabe von IP-Adressen, Benutzerdaten sowie z.B. durch Google-Suche stattfindende Profilerstellung über die Nutzenden sind immanenter Bestandteil der Smartphone-Technologie und werden aktuell durch in der Regel unverständliche Allgemeinen Geschäftsbedingungen verantwortlich auf die (oft nicht digitalkompetenten) Anwendenden befreiend verlagert.

Aktuell und zusätzlich zu gesetzlichen Forderungen und Vorgaben z.B. zur Nutzung einer elektronischen Gesundheitskarte (eGK) oder des elektronischen Personalausweises zur Herstellung einer vertrauenswürdigen digitalen Identität (eID) besteht die technische Notwendigkeit einer Lösung, mit welcher alle Mitmenschen an einer modernen, finanzierbaren und zukunftsfähigen Versorgung ohne Angst vor Verlust der Privatsphäre oder Verletzung von Persönlichkeitsrechten im besten Fall anonym teilhaben können.

Das Online-Zugangs-Gesetz, diverse eHealth-Gesetze und die Telematik-Vorschriften des fünften Sozialgesetzbuches sehen eine Vielzahl von digitalen Anwendungen verpflichtend zur Wahrnehmung der Rechte zur informationellen Selbstbestimmung und Daseinsfürsorge vor. Diese müssen dem mündigen Bürger und Versicherten die Steuerung der Datenströme und Informationen ermöglichen. Die Umsetzung dieser Anwendungen wird mit Fristen zur Bereitstellung versehen, um weitere Verzögerungen zu vermeiden, bleiben aber mangels Pönalen unerledigt.

Wie und in welcher Form dieser zwingend erforderliche Zugang des Versicherten bei gleichzeitiger vollumfänglicher Beachtung der Vorschriften der DSGVO/GDPR umgesetzt werden soll, ist bis zum heutigen Tag vor allem aus Sicht des Bundesdatenschutzes nicht gelöst. Der alternative Zugang @home per Online-Zugriff mittels Computer oder Mobilgerät. bringt sowohl im Datenschutz als auch in der Umsetzbarkeit für alle Bevölkerungsgruppen und deren digitalen Kompetenzen größere Hindernisse.

Aufgabe der vorliegenden Erfindung ist es ein System zur diskriminierungsfreien, sicheren und mobilen Bereitstellung digitaler Dienstleistungen eines Dienstleistungsanbieters über ein mobiles, manipulations- und diebstahlgesichertes Terminal an einen Benutzer bereitzustellen.

Diese Aufgabe wird erfindungsgemäß durch die technische Lehre der unabhängigen Ansprüche gelöst. Weitere vorteilhafte Ausgestaltungen der Erfindung ergeben sich aus den abhängigen Ansprüchen, der Beschreibung, den Figuren sowie den Beispielen.

Die vorliegende Erfindung betrifft daher ein System zur Bereitstellung von digitalen Dienstleistungen umfassend einer speziell für Personen- und Gesundheitsdaten gestalteten, multifunktionalen Hardware und vom offenen Internet gekapselten Datenübertragungswegen, das gesamtheitlich auf die dauerhafte Datenspeicherung der vom Benutzer generierten oder eingegebenen Daten verzichtet, sowie umfangreicher Dienstleistungskomponenten, welche von Einrichtung des Terminals, dessen individuelle Konfiguration, die Überwachung des Betriebs des Terminals sowie der Server einschließlich Wartung reichen.

Das erfindungsgemäße System ermöglicht zudem die individuelle Ausstattung eines Zugangsgerätes zum Beispiel in Form von Tablets hinsichtlich Funktion oder verfügbarer Information an jedem einzelnen Einsatzort und erlaubt so die Integration und die Schaffung digitaler Kompetenzen ohne Gefahren samt Möglichkeiten von Aufklärung und niederschwelligem Informationszugang auch nicht technikaffiner Bevölkerungsgruppen.

Aufgrund der Mobilität des Terminals können digitale Dienstleistungen abseits des öffentlichen Internets überall dort verfügbar gemacht werden, wo potenzielle Nutzer sich täglich befinden oder der Bedarf an Unterstützung entsteht. Das erfindungsgemäße System ermöglicht so jedem Menschen, unabhängig von dessen Fähigkeiten, die digitale Teilhabe, ohne Erfordernis von Technik oder Wissen und auf eine sichere, kostenschonende, effiziente, anwenderorientierte und flächendeckende Art und Weise.

Somit betrifft die vorliegende Erfindung ein System (1) zur diskriminierungsfreien, sicheren und mobilen Bereitstellung digitaler Dienstleistungen eines Dienstleistungsanbieters (100) über ein mobiles, manipulations- und diebstahlgesichertes Terminal (200) an einen Benutzer (300) umfassend
- ein mobiles, manipulations- und diebstahlgesichertes Terminal (200) umfassend
   - ein versiegeltes Gehäuse (210),
   - ein Mobilfunkmodul (220) mit einer eindeutigen Mobilfunkkennung (221) und einer Geräteadresse (222), das so konfiguriert ist, dass es ausschließlich eine permanente, gesicherte, verschlüsselte, gekapselte und drahtlose Verbindung (500) mit mindestens einem Server (610) in einem Datenzentrum (600) über einen privaten Zugangspunkt (510) eingeht,
   - ein in das versiegelte Gehäuse (210) integriertes Kartenlesemodul (230) zum Auslesen von Smartcards (231) und NFC-Karten (232),
   - ein Touchscreen (240) zur Anzeige von Informationen an und zur Eingabe von Daten durch den Benutzer auf einer graphischen Benutzeroberfläche (410) eines Anwendungsprogrammes (400),
   - ein Positionsbestimmungsmodul (250) zur Bestimmung einer geographischen Position des Terminals (200),
- mindestens einen Server (610) in einem Datenzentrum (600), der so konfiguriert ist, dass er die permanente, gesicherte, verschlüsselte und gekapselte Verbindung (500) mit dem Terminal (200) und den Betriebszustand des Terminals (200) kontinuierlich überwacht,

wobei das Anwendungsprogramm (400) und die graphische Benutzeroberfläche (410) von einem auf dem mindestens einen Server (610) in dem Datenzentrum (600) laufenden Dienst (650) auf dem Terminal (200) bereitgestellt und kontrolliert werden; wobei das Anwendungsprogramm (400) so konfiguriert ist, dass es die während einer Sitzung eines Benutzers (300) generierten Daten nach Beendigung der Sitzung löscht,
wobei das Anwendungsprogramm (400) so konfiguriert ist, dass es das Terminal (200) sperrt, wenn die vom Positionsbestimmungsmodul (250) erfassten Positionsdaten (251) außerhalb eines vordefinierten Bereichs liegen,
wobei der mindestens eine Server (610) so konfiguriert ist, dass er auf dem Terminal (200) erstellte, signierte und verschlüsselte Datenpakete (520) über die permanente, gesicherte, verschlüsselte und gekapselte Verbindung (500) empfängt und die Datenpakete (520) über einen mandantenfähigen verschlüsselten VPN-Tunnel (530) zu einem entfernten Netzwerk (150) des Dienstleistungsanbieters (100) komprimiert weitergibt und
wobei die permanente, gesicherte, verschlüsselte, gekapselte und drahtlose Verbindung (500) zwischen dem Terminal (200) und dem mindestens einen Server (610) nur aufgebaut wird, wenn die eindeutige Mobilfunkkennung (221) des Mobilfunkmoduls (220) mit einer auf dem mindestens einen Server (610) hinterlegten, vordefinierten Mobilfunkkennung übereinstimmt und die Geräteadresse (222) des Mobilfunkmoduls (220) mit einer auf dem mindestens einen Server (610) hinterlegten, vordefinierten Geräteadresse übereinstimmt.

Unter dem Begriff "diskriminierungsfrei" wird hierin verstanden, dass das System jeglichen Personen einen Zugang zu digitalen Dienstleistungen ermöglicht, unabhängig von dessen Fähigkeiten, ohne Erfordernisse von Technik oder Wissen und auf eine sichere, kostenschonende, effiziente, anwenderorientierte und flächendeckende Art und Weise. Im Speziellen bezieht sich diskriminierungsfrei damit auch auf die Bedienung des mobilen Terminals, das vorzugsweise barrierefrei oder zumindest barrierearm nutzbar ist. Eine barrierefreie oder zumindest barrierearme Nutzung des Terminals wird insbesondere durch entsprechend angepasste Darstellungen auf dem Touchscreen (z.B. hoher Kontrast, starke Vergrößerung, besondere Farbschemata, Schriftanpassungen) oder Tonausgaben über integrierte Lautsprecher oder anschließbare Kopfhörer sichergestellt. Ebenso ist eine Sprachsteuerung des Terminals über ein darin integriertes Mikrofon möglich.

Unter dem Begriff "sektorenübergreifend" wird hierin verstanden, dass das System Dienstleistungen verschiedener Dienstleistungsanbieter aus unterschiedlichen Bereichen und Fachdisziplinen, wie etwa Bürgerdienste oder dem Gesundheitswesen, bereitstellt. Dazu umfasst das erfindungsgemäße System Dadurch können im Falle des Gesundheitswesens, die Zusammenarbeit, Vernetzung und Kommunikation verschiedener Fachdisziplinen und Akteure verbessert werden. So können zum Beispiel ambulant tätige Ärzte oder Belegärzte mit Einrichtungen wie Krankenhäusern, Apotheken oder Pflegestützpunkten enger zusammenarbeiten. Die sektorenübergreifende Bereitstellung der Dienstleistungen ist besonders vorteilhaft für Menschen mit chronischen Erkrankungen, die auf regelmäßige medizinische Hilfe und kontinuierliche Behandlungen angewiesen sind, da durch die Zusammenarbeit auf verschiedenen Sektoren lange Wege, viel Zeit, doppelte Untersuchungen und Behandlungen - und letztlich auch Geld gespart werden kann.

Unter dem Begriff "sozialdatenkonform" wird hierin die Konformität von Sozialdaten verstanden, und damit die Erfüllung von rechtlichen, regulatorischen und betrieblichen Anforderungen an das System im Umgang mit Sozialdaten, in der Art, dass die Sozialdaten so strukturiert, gespeichert und verwaltet werden, dass sie vor Verlust, Beschädigung, Diebstahl und Missbrauch geschützt sind. Dies setzt in der Regel auch die Umsetzung von Datensicherheit und Datenschutz voraus. Damit beinhaltet "sozialdatenkonform" ebenso die Etablierung von Kontrollen, um Datenschutz, Integrität und Verfügbarkeit zu schützen und Datenmissbrauch zu verhindern. Dienstleistungsanbieter profitieren von der sozialdatenkonformität des Systems, da sie ihnen hilft, effiziente Systeme für das Datenmanagement zu erstellen und zu erhalten.

Besonders hervorzuheben ist die sichere Bereitstellung der digitalen Dienstleistungen durch das erfindungsgemäße System. Dies wird insbesondere dadurch sichergestellt, dass die Weitergabe von personenbezogenen Daten, Gesundheitsdaten, sowie IP-Adressen vermieden wird und auf die dauerhafte Speicherung von Anwenderprofilen oder Verwendung von zuordenbaren Passwörtern oder Benutzerkennungen verzichtet werden. Zudem erfolgen die Datenübertragungen im System ausschließlich über permanent überwachte, gekapselte und eindeutig definierte Kanäle.

Ein weiterer Beitrag zur Sicherheit leistet die Sicherung des Terminals gegenüber Manipulationen und Diebstahl. Dazu ist das Terminal u.a. mit einem versiegelten Gehäuse ausgestattet, das eine mechanische Manipulation erschwert. Zudem sind durch mehrfache Sicherungsmaßnahmen (s.u.) die physikalischen Schnittstellen des Terminals, z.B. USB-Ports durch das Anwenderprogramm deaktiviert. Weiterhin wird der Diebstahl des mobilen Terminals durch das Positionsbestimmungsmodul erschwert, wodurch eine Lokalisation des Geräteortes und Deaktivierung des Gerätes bei unerlaubter Verwendung außerhalb des vorgesehenen Einsatzbereiches ermöglicht werden.

Das System (1) ist ferner dadurch gekennzeichnet, dass die digitalen Dienstleistungen an nahezu jedem Ort angeboten werden können ("mobile Bereitstellung"). Dies wird zum einen durch die Portabilität des Terminals als auch durch die gesicherte, verschlüsselte, gekapselte und drahtlose Verbindung mit dem Datenzentrum über einen privaten Zugangspunkt ermöglicht. Gleichzeitig ist das System auch so ausgelegt, den Zugriff auf die digitalen Dienstleistungen auf bestimmte Orte beschränken zu können ("Diebstahlschutz"). Über die kommunikative Verbindung mit dem Datenzentrum werden nicht nur die digitalen Dienstleistungen an den Benutzer angeboten, sondern auch das Terminal kontinuierlich überprüft, administriert und gewartet. So werden Datensicherheit und Funktionsfähigkeit des Systems gewährleistet, ohne dass der Benutzer selbst eingreifen muss. Das erfindungsgemäße System ermöglicht so jedem Menschen, unabhängig von dessen Fähigkeiten, die digitale Teilhabe, ohne Erfordernis von Technik oder Wissen und auf eine sichere, kostenschonende, effiziente, anwenderorientierte und flächendeckende Art und Weise.

Das erfindungsgemäße System (1) zur diskriminierungsfreien, sicheren und mobilen Bereitstellung digitaler Dienstleistungen bietet daher folgende Vorteile:
- Einsatz von Identitätskarten, einschließlich Gesundheits-, und EC-Karten inkl. Prüfung der Gültigkeit und Zuordnung zum jeweiligen Dienstleistungsanbieter mit der Option individuelle Funktionen gekapselt aufzurufen,
- Einsatz von Technologien zur biometrischen Personenerkennung und Bilderstellung zur Verwendung für Identifikationsprozesse sowie Identitätsnachweisen wie eGK usw.,
- Vermeidung von Weitergabe von personenbezogenen Daten, IP-Adressen, Speicherung von Anwenderprofilen oder Verwendung von zuordenbaren Passwörtern oder Benutzerkennungen sowie Hintergrundprofilerstellungen,
- Überwachte Übertragung des Datenstromes über permanent überwachte, gekapselte, verschlüsselte und eindeutig definierte Kanäle mit zusätzlichen Absicherungen innerhalb des Netzwerks,
- Verwendung einer nach Maximalerfordernissen des Datenschutzes überwachter Serverstruktur in DSGVO-zertifizierten Rechenzentren (KRITIS-Vorgaben),
- Mechanischer und softwareseitiger Schutz der physikalischen Schnittstellen des Terminals vor lokalem Zugriff oder Missbrauch,
- Schutz der eingesetzten Software und Deaktivierung sämtlicher lokaler Administration,
- Lokalisation des Geräteortes und Deaktivierung des Gerätes bei unerlaubter Verwendung außerhalb des vorgesehenen Einsatzbereiches durch das Positionsbestimmungsmodul,
- Betrieb und Pflege aus der Ferne (remote),
- direkte Mehrfachverwendung bestehender Schnittstellen der jeweiligen Dienstleistungsanbieter durch gemanagtes Datenübergabeverfahren,
- optional integrierte Infotainmentplattform für Ansprache und Information über den Bildschirm in den Nichtverwendungsphasen.

Unter dem Begriff "digitale Dienstleistung" werden hierin Dienstleistungen eines Dienstleistungsanbieters verstanden, die dem Benutzer über das erfindungsgemäße System bereitgestellt werden. Dazu zählen beispielsweise Gesundheitsdienstleistungen, die von einer Krankenkasse, einer medizinischen Einrichtung oder einem Arzt bereitgestellt werden und die Ermöglichung, Koordination oder Verwaltung von u.a. Medikamenten, pharmazeutischen Produkten, medizinischen Geräten oder anderen medizinischen Behandlungen betreffen. Ebenso können digitale Dienstleistungen Verwaltungsdienstleistungen und insbesondere Bürgerdienstleistungen umfassen, wie beispielsweise Adressänderung im Personalausweis, Auskunft aus dem Gewerberegister, Beglaubigung von Dokumenten oder Unterschriften, Melderegisterauskunft, Wohngeld beantragen oder erhöhen, Ermäßigung der KiTa-Kosten beantragen, Reisepass beantragen, Reisepass Verlustanzeige, vorläufigen Reisepass beantragen, Kinderreisepass beantragen, Fischereischein und Ausnahmen von der Fischereischeinpflicht beantragen, Führungszeugnis beantragen, Gewerbe an-, ab- oder ummelden, Hilfe zum Lebensunterhalt (Sozialhilfe) beantragen, Hilfe zur Pflege beantragen, Hilfe zur Überwindung besonderer sozialer Schwierigkeiten beantragen, Kulturförderung beantragen, Leistungen aus dem Bildungspaket beantragen, Nebenwohnung abmelden, Parkausweis für Schwerbehinderte, Personalausweis ersetzen, Personalausweis Verlustanzeige, vorläufigen Personalausweis beantragen und Wohnsitz Abmeldung.

Der hierin verwendete Begriff "Dienstleistungsanbieter" kann sich auf einen Drittanbieter einer Dienstleistung für ein Unternehmen und/oder eine Einzelperson und/oder eine Gruppe von Einzelpersonen beziehen, ist aber nicht darauf beschränkt. Dazu zählen beispielsweise staatliche Behörden und Organe, wie Polizei, Zoll, Bürgerämter oder Gesundheitsämter; medizinische Einrichtungen, Krankenkassen, Pflegedienste, Rettungsdienste, Arztpraxen oder private Unternehmen.

Der hier verwendete Begriff "Benutzer" kann sich auf eine Einzelperson oder eine Gruppe von Personen beziehen, ist aber nicht darauf beschränkt. Dazu gehören unter anderem Privatpersonen, Mitarbeiter von Organisationen und/oder Unternehmen, Mitglieder von Dienstleistungsanbietern, Mitglieder einer Behörde, Mitglieder von Organisationen, Männer, Frauen, ältere Menschen, pflegebedürftige Menschen und Kinder.

Bei dem Terminal (200) des erfindungsgemäßen Systems handelt es sich um ein elektronisches, mobiles Endgerät, umfassend ein versiegeltes Gehäuse (210), ein Mobilfunkmodul (220), ein integriertes Kartenlesemodul (230), ein Touchscreen (240) und ein Positionsbestimmungsmodul (250). Unter "mobil" wird in diesem Zusammenhang verstanden, dass das Endgerät tragbar (portabel) ist, einschließlich der Möglichkeit, dass das Terminal an einer Halterung oder auf einem Ständer fixiert werden kann, und eine gesicherte, verschlüsselte, gekapselte und drahtlose Verbindung mit dem Datenzentrum über einen privaten Zugangspunkt.

Das erfindungsgemäße System ermöglicht jedem Menschen, unabhängig von dessen Fähigkeiten, die digitale Teilhabe, indem das vom System verwaltete Terminal einen Zugang zu den digitalen Dienstleistungen und Services anbietet, die der Benutzer von sich aus in Anspruch nehmen kann.

Somit betrifft die vorliegende Erfindung ein System (1) zur diskriminierungsfreien, sicheren und mobilen Bereitstellung digitaler Dienstleistungen eines Dienstleistungsanbieters (100) über ein mobiles, manipulations- und diebstahlgesichertes Self-Service-Zugangsgerät (200) an einen Benutzer (300) umfassend
- ein mobiles, manipulations- und diebstahlgesichertes Self-Service-Zugangsgerät (200) umfassend
   - ein versiegeltes Gehäuse (210),
   - ein Mobilfunkmodul (220) mit einer eindeutigen Mobilfunkkennung (221) und einer Geräteadresse (222), das so konfiguriert ist, dass es ausschließlich eine permanente, gesicherte, verschlüsselte, gekapselte und drahtlose Verbindung (500) mit mindestens einem Server (610) in einem Datenzentrum (600) über einen privaten Zugangspunkt (510) eingeht,
   - ein in das versiegelte Gehäuse (210) integriertes Kartenlesemodul (230) zum Auslesen von Smartcards (231) und NFC-Karten (232),
   - ein Touchscreen (240) zur Anzeige von Informationen an und zur Eingabe von Daten durch den Benutzer auf einer graphischen Benutzeroberfläche (410) eines Anwendungsprogrammes (400),
   - ein Positionsbestimmungsmodul (250) zur Bestimmung einer geographischen Position des Terminals (200),
- mindestens einen Server (610) in einem Datenzentrum (600), der so konfiguriert ist, dass er die permanente, gesicherte, verschlüsselte und gekapselte Verbindung (500) mit dem Self-Service-Zugangsgerät und den Betriebszustand des Self-Service-Zugangsgerätes kontinuierlich überwacht,

wobei das Anwendungsprogramm (400) und die graphische Benutzeroberfläche (410) von einem auf dem mindestens einen Server (610) in dem Datenzentrum (600) laufenden Dienst (650) auf dem Self-Service-Zugangsgerät bereitgestellt und kontrolliert werden;
wobei das Anwendungsprogramm (400) so konfiguriert ist, dass es die während einer Sitzung eines Benutzers (300) generierten Daten nach Beendigung der Sitzung löscht,
wobei das Anwendungsprogramm (400) so konfiguriert ist, dass es das Self-Service-Zugangsgerät sperrt, wenn die vom Positionsbestimmungsmodul (250) erfassten Positionsdaten (251) außerhalb eines vordefinierten Bereichs liegen,
wobei der mindestens eine Server (610) so konfiguriert ist, dass er auf dem Self-Service-Zugangsgerät erstellte, signierte und verschlüsselte Datenpakete (520) über die permanente, gesicherte, verschlüsselte und gekapselte Verbindung (500) empfängt und die Datenpakete (520) über einen mandantenfähigen verschlüsselten VPN-Tunnel (530) zu einem entfernten Netzwerk (150) eines Dienstleistungsanbieters (100) komprimiert weitergibt und
wobei die permanente, gesicherte, verschlüsselte, gekapselte und drahtlose Verbindung (500) zwischen dem Self-Service-Zugangsgerät und dem mindestens einen Server (610) nur aufgebaut wird, wenn die eindeutige Mobilfunkkennung (221) des Mobilfunkmoduls (220) mit einer auf dem mindestens einen Server (610) hinterlegten, vordefinierten Mobilfunkkennung übereinstimmt und die Geräteadresse (222) des Mobilfunkmoduls (220) mit einer auf dem mindestens einen Server (610) hinterlegten, vordefinierten Geräteadresse übereinstimmt.

Das Terminal des erfindungsgemäßen Systems ist beispielsweise eine mobile Vorrichtung, die zur Verarbeitung von Daten mit Hilfe eines Prozessors eingerichtet ist, z.B. eine Datenverarbeitungseinrichtung wie ein tragbarer Computer, ein persönlicher digitaler Assistent, Tablet, ein Mobiltelefon und/oder jedes andere mobile elektronische Gerät, das einen Prozessor aufweist. Unter Prozessor sollen unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden.

Das Terminal des erfindungsgemäßen Systems weist ein versiegeltes Gehäuse (210) auf, um den physikalischen Zugriff auf Elektronik und die Firmware zu verhindern und eine Öffnung des Gehäuses nach einer Manipulation zu erkennen. Die dazu eingesetzten Siegel sind vorzugsweise fälschungssicher und besitzen Echtheitsmerkmale (z.B. Hologramme). Die Versiegelung schützt dabei vor unbemerkten Zugriffen und Manipulationen. Unautorisierte Veränderungen werden damit erst gar nicht ermöglicht. Zudem erkennt der Benutzer, dass Veränderungen zum Zwecke der Manipulation am Terminal stattgefunden haben. Das versiegelte Gehäuse ist daher so ausgestaltet, dass "gewaltsames" Öffnen des Gehäuses verhindert oder zumindest die Unversehrtheit und Echtheit des Terminals leicht erkennbar ist, dass die Signalleitungen nicht von außen zugänglich sind und dass ein Austausch des originalen Terminals durch ein manipuliertes Gerät feststellbar ist oder sicherheitsrelevante Funktionen vom Terminal nicht mehr durchgeführt werden.

Vorzugsweise ist das Siegel an einer Stelle des Gehäuses, an der zwei Gehäuseteile zusammengefügt werden, derart angebracht, dass beim Öffnen, Anhebeln und Aufklappen der Gehäusehälften ein Beschädigen des Siegels unvermeidlich ist. Vorzugsweise ist das Siegel zudem an einer Stelle angebracht, wo es durch normale Benutzung des Terminals durch den Benutzer nicht beschädigt wird.

Um Schnittangriffe (z.B. mittels Skalpell) zu erschweren oder um die Erkennung von Manipulationen zu erleichtern, ist das Siegel vorzugsweise so aufgebracht, dass Bereiche des Siegels, die keine Echtheitsmerkmale aufweisen, nicht über Schnittkanten verlaufen. Um ein Ausschneiden dieses Bereichs zu erschweren, sollte die Form keine trivialen geometrischen Formen (Kreis, Rechteck, Dreieck) darstellen, sondern beispielsweise abgerundete Ecken, komplexere Grundflächen oder Aussparungen aufweisen. Derartige Bereiche sollten sich zudem nicht über eine komplette Siegelbreite oder -länge erstrecken.

Das Gehäuse ist ferner derart ausgestaltet, dass Schnittangriffe des Siegels erschwert werden. Hierzu sollte die Kante, an der die Gehäuseteile aufeinanderstoßen, vorzugsweise keine einfache Gerade sein, die einen Schnittangriff nicht nur erleichtert, sondern auch nach dem Zusammenfügen der Gehäuseteile den Schnitt nur schwer erkennen lassen. Bevorzugt ist daher eine Gehäuseteilekante in Wellenform, Dreiecksform oder Trapezform.

Weiterhin umfasst das Terminal des erfindungsgemäßen Systems ein Mobilfunkmodul (220), das so konfiguriert ist, dass es ausschließlich eine permanente, gesicherte, verschlüsselte, gekapselte und drahtlose Verbindung (500) mit mindestens einem Server (610) in einem Datenzentrum (600) über einen privaten Zugangspunkt (510) eingeht. Dazu ist das Mobilfunkmodul mit einem physikalischen oder virtualisierten Geräteidentifikationsmodul zur Authentifizierung gegenüber dem Mobilfunknetzwerk ausgestattet. Das Geräteidentifikationsmodul ist vorzugsweise eine SIM-Karte (UICC, USIM), eine eSIM, ein EAP-Identity-Modul oder eine EAP-Identity-Funktion und erlaubt damit die Identifikation des Gerätes im Mobilfunknetzwerk. Eine Rückschlüsselung auf die die Hardware nutzende Person bleibt mittels Struktur des Anwendungsprogramms und der hierin beschriebenen Kommunikation mit dem Datenzentrum unterbunden.

Besonders bevorzugt sind netzunabhängige, aus der Ferne programmierbare M2M-SIM-Karten als Geräteidentifikationsmodul. Durch die Netzunabhängigkeit und ungesteuertem Roaming wird stets das Mobilfunknetzwerk mit der besten Verfügbarkeit für die permanente, gesicherte, verschlüsselte, gekapselte und drahtlose Verbindung (500) verwendet. Ferner kann der Inhalt der M2M-SIM-Karte aus der Ferne geändert werden, sodass beispielsweise ein Anbieterwechsel ohne Austausch der SIM-Karte am Terminal möglich ist,

Welche Berechtigungen zur Nutzung des Mobilfunkmoduls zum Mobilfunk, d.h. welche Berechtigungen zur Nutzung von vom Mobilfunknetzwerk bereitgestellten Kommunikationsmöglichkeiten das Terminal erhält, hängt jedoch zusätzlich zu den dem Mobilfunkmodul oder dessen Teilnehmeridentifikationsmodul zugeordneten Berechtigungen auch von der eindeutigen Mobilfunkkennung (221) und dem Terminal selbst ab. Die eindeutige Mobilfunkkennung (221) ist vorzugsweise eine MSISDN-Nummer (Mobile Station International Subscriber Directory Number) oder IMEI-Nummer (International Mobile Subscriber Identity). Die IMSI Nummer besteht aus drei Hauptkomponenten: Mobile Country Code (MCC), Mobile Network Code (MNC) und Mobile Subscription Identification Number (MSIN). Zusammen gewährleisten diese Komponenten eine genaue Identifizierung und Authentifizierung von Abonnenten in Telekommunikationsnetzen.

Das Terminal selbst kann unabhängig vom Mobilfunkmodul und dem Mobilfunknetzwerk die Datenübertragung kryptographisch schützen, z.B. mittels MACsec, IPsec oder TLS, DTLS oder mittels OPC UA. Darüber hinaus ist auch die Kommunikation innerhalb des Funkkanals über einen S-VPN-Tunnel ebenfalls verschlüsselt, wie auch das darin enthaltene Datenpaket bis zum Eingang im Server des Datenzentrums.

Für das Terminal wird eine Kommunikationsmöglichkeit entsprechend der diesem Terminal zugeordneten Berechtigung bereitgestellt. Die Prüfung der Berechtigung und die Durchsetzung können durch das Mobilfunkmodul selbst, aber auch durch den privaten Zugriffspunkt und/oder dem mindestens einen Server im Datenzentrum erfolgen. Dazu kann die Geräteadresse (222) als Identifizierungsinformation des Terminals an das Mobilfunknetzwerk übermittelt werden.

Das Mobilfunkmodul (220) des Terminals ist zudem so konfiguriert, dass es ausschließlich eine permanente, gesicherte, verschlüsselte, gekapselte und drahtlose Verbindung (500) mit einem vorgegeben Server (610) in einem Datenzentrum (600) über einen privaten Zugangspunkt (510) eingeht. Dazu kann z.B. die IP-Adresse des vorgegeben Servers (610) im Terminal hinterlegt sein. "Ausschließlich" bedeutet hierbei, dass nur eine drahtlose Verbindung mit dem privaten Zugangspunkt herstellbar ist. Vorzugsweise ist die Netzwerkadresse des privaten Zugangspunkts nicht öffentlich bekannt und messtechnisch nicht identifizierbar.

Die Begriffe "privater Zugangspunkt", "nicht öffentlicher Zugangspunkt" und "nicht öffentlicher Netzwerkpunkt" werden hierin synonym verwendet.

Eine "permanente, gesicherte, verschlüsselte, gekapselte und drahtlose Verbindung (500) mit mindestens einem Server (610) in einem Datenzentrum (600) über einen privaten Zugangspunkt (510)" bedeutet hier, eine kommunikative Datenverbindung mit einem Server in einem Datenzentrum. Diese Verbindung umfasst mindestens zwei Verbindungen, eine drahtlose Verbindung (511) zwischen dem Terminal und dem privaten Zugangspunkt und eine Verbindung (512) zwischen dem privaten Zugangspunkt (510) und dem Datenzentrum (600). Dementsprechend handelt es sich bei der "permanenten, gesicherten, verschlüsselten, gekapselten und drahtlosen Verbindung (500) mit mindestens einem Server (610) in einem Datenzentrum (600) über einen privaten Zugangspunkt (510)" um eine drahtlose Verbindung. Der Begriff "permanente, gesicherte, verschlüsselte, gekapselte und drahtlose Verbindung (500) mit mindestens einem Server (610) in einem Datenzentrum (600) über einen privaten Zugangspunkt (510)" wird hierin daher synonym zu "permanente, gesicherte, verschlüsselte, gekapselte und teilweise drahtlose Verbindung (500) mit mindestens einem Server (610) in einem Datenzentrum (600) über einen privaten Zugangspunkt (510)" verwendet. Vorzugsweise erfolgt die Verbindung (512) zwischen dem privaten Zugangspunkt (510) und dem Datenzentrum (600) über einen VPN-Tunnel (535).

Die permanente, gesicherte, verschlüsselte, gekapselte und drahtlose Verbindung (500) erfolgt nicht über das öffentliche Internet ("Kapselung"), sondern ist über die privaten Zugangspunkte davon getrennt. Der Datenverkehr erfolgt direkt über den privaten Zugangspunkt mit dem Sever des Datenzentrums.

Über die Vernetzung mittels Mobilfunk-Technologie werden gesicherte Verbindungen mit Servern im Datenzentrum aufgebaut und eine bi-direktionale Kommunikation etabliert. Durch die permanente, gesicherte, verschlüsselte, gekapselte und drahtlose Verbindung (500) mit mindestens einem Server (610) in einem Datenzentrum (600) über einen privaten Zugangspunkt (510) wird ein eigenes, sicheres Netzwerk unabhängig vom Netzwerk der Lokationen aufgebaut. Das so betriebene, private, hochsichere IP-Netzwerk stellt die Grundlage der gesicherten Datenkommunikation dar und ermöglicht damit, die sichere und mobile Bereitstellung der digitalen Dienstleistungen. Kontrolle der und Übersicht über die Netzwerkteilnehmer (Terminal(s)) erfolgt immer und vollständig aus dem Datenzentrum.

Bei der permanenten, gesicherten, verschlüsselten, gekapselten und drahtlosen Verbindung (500) mit mindestens einem Server (610) in einem Datenzentrum (600) über einen privaten Zugangspunkt (510) handelt es sich um eine vierfach gesicherte Verbindung. Die erste Sicherung erfolgt über die Privatsphäre des privaten Zugangspunktes (510), dessen Netzwerkadresse vorzugsweise nicht öffentlich bekannt und messtechnisch nicht identifizierbar ist. Ohne das Wissen um diesen Zugangspunkt ist ein Auffinden nicht ohne größeren, technischen Aufwand möglich. Die zweite Sicherung erfolgt über die Zugangsberechtigung, die über eine eindeutige Hardware-Authentifizierung erfolgt. Nur die richtige, zugelassene und im Datenzentrum registrierte Terminal-Hardware erhält die Freigabe, sich mit dem privaten Netzwerk zu verbinden. Im Falle eines unbefugten Zugriffes fällt dies sofort auf und das betreffende Terminal wird isoliert und aus dem Netzwerk ausgeschlossen. Auf der dritten Sicherungsebene werden alle am Terminal erzeugten Daten, einschließlich der privaten Benutzerdaten, verschlüsselt und erst nach erfolgreicher Verschlüsselung übertragen. Im Datenzentrum wird das Paket angenommen, die Integrität geprüft und an den jeweiligen Dienstleistungsanbieter als Adressaten, z.B. die Krankenkasse, weitergeleitet. Hierbei können Daten Ende-zu-Ende verschlüsselt werden. Eine vierte und abschließende Sicherungsebene stellt die Signierung der Daten selbst dar. Alle im Terminal erstellten Daten werden vom System mit einem individuellen, digitalen Stempel versehen. Über diese individuelle digitale Signatur kann die Unversehrtheit der jeweiligen Daten kontrolliert werden.

Auch das Terminal selbst ist durch mehrere Maßnahmen gegen Manipulation geschützt, die alle über die Verbindung (500) zentral überwacht werden (s.o.).

Durch die permanente, gesicherte, verschlüsselte, gekapselte und drahtlose Verbindung (500) mit dem mindestens einen Server (610) und der mandantenfähigen verschlüsselten Verbindung mittels VPN-Tunnel (530) zu dem Dienstleistungsanbieter (100) ist das erfindungsgemäße System in der Lage,
1. den Betriebszustand des Terminals (200) kontinuierlich zu überwachen,
2. das Anwendungsprogramm (400) und die graphische Benutzeroberfläche (410) von einem auf dem mindestens einen Server (610) in dem Datenzentrum (600) laufenden Dienst (650) auf dem Terminal (200) bereitzustellen und zu kontrollieren,
3. die digitalen Dienstleistungen des Dienstleistungsanbieters auf dem Terminal bereitzustellen,
4. Dritten den (unberechtigten) Zugriff auf die übermittelten Datenpakete zu verwehren und
5. unberechtigte Geräte aus dem Netzwerk auszuschließen.

Die voran beschriebenen Sicherheitsmaßnahmen des erfindungsgemäßen Systems ermöglichen daher die sektorenübergreifende diskriminierungsfreie, sichere und mobile Bereitstellung digitaler Dienstleistungen verschiedener Dienstleistungsanbieter über ein mobiles, sozialdatenkonform gekapseltes, manipulations- und diebstahlgesichertes Terminal an einen oder mehrere Benutzer.

Somit betrifft die vorliegende Erfindung ebenfalls ein System (1) zur diskriminierungsfreien, sektorenübergreifenden, sicheren und mobilen Bereitstellung digitaler Dienstleistungen mehrerer Dienstleistungsanbieter (100) über ein mobiles, manipulations- und diebstahlgesichertes Terminal (200) an einen Benutzer (300) umfassend
- ein mobiles, manipulations- und diebstahlgesichertes Terminal (200) umfassend
   - ein versiegeltes Gehäuse (210),
   - ein Mobilfunkmodul (220) mit einer eindeutigen Mobilfunkkennung (221) und einer Geräteadresse (222), das so konfiguriert ist, dass es ausschließlich eine permanente, gesicherte, verschlüsselte, gekapselte und drahtlose Verbindung (500) mit mindestens einem Server (610) in einem Datenzentrum (600) über einen privaten Zugangspunkt (510) eingeht,
   - ein in das versiegelte Gehäuse (210) integriertes Kartenlesemodul (230) zum Auslesen von Smartcards (231) und NFC-Karten (232),
   - ein Touchscreen (240) zur Anzeige von Informationen an und zur Eingabe von Daten durch den Benutzer auf einer graphischen Benutzeroberfläche (410) eines Anwendungsprogrammes (400),
   - ein Positionsbestimmungsmodul (250) zur Bestimmung einer geographischen Position des Terminals (200),
- mindestens einen Server (610) in einem Datenzentrum (600), der so konfiguriert ist, dass er die permanente, gesicherte, verschlüsselte und gekapselte Verbindung (500) mit dem Terminal (200) und den Betriebszustand des Terminals (200) kontinuierlich überwacht,

wobei das Anwendungsprogramm (400) und die graphische Benutzeroberfläche (410) von einem auf dem mindestens einen Server (610) in dem Datenzentrum (600) laufenden Dienst (650) auf dem Terminal (200) bereitgestellt und kontrolliert werden; wobei das Anwendungsprogramm (400) so konfiguriert ist, dass es die während einer Sitzung eines Benutzers (300) generierten Daten nach Beendigung der Sitzung löscht,
wobei das Anwendungsprogramm (400) so konfiguriert ist, dass es das Terminal (200) sperrt, wenn die vom Positionsbestimmungsmodul (250) erfassten Positionsdaten (251) außerhalb eines vordefinierten Bereichs liegen,
wobei der mindestens eine Server (610) so konfiguriert ist, dass er auf dem Terminal (200) erstellte, signierte und verschlüsselte Datenpakete (520) über die permanente, gesicherte, verschlüsselte und gekapselte Verbindung (500) empfängt und die Datenpakete (520) über einen mandantenfähigen verschlüsselten VPN-Tunnel (530) zu einem entfernten Netzwerk (150) eines Dienstleistungsanbieters (100) komprimiert weitergibt und
wobei die permanente, gesicherte, verschlüsselte, gekapselte und drahtlose Verbindung (500) zwischen dem Terminal (200) und dem mindestens einen Server (610) nur aufgebaut wird, wenn die eindeutige Mobilfunkkennung (221) des Mobilfunkmoduls (220) mit einer auf dem mindestens einen Server (610) hinterlegten, vordefinierten Mobilfunkkennung übereinstimmt und die Geräteadresse (222) des Mobilfunkmoduls (220) mit einer auf dem mindestens einen Server (610) hinterlegten, vordefinierten Geräteadresse übereinstimmt.

Somit betrifft die vorliegende Erfindung ebenfalls ein System (1) zur diskriminierungsfreien, sicheren und mobilen Bereitstellung digitaler Dienstleistungen eines Dienstleistungsanbieters (100) über ein mobiles, manipulations- und diebstahlgesichertes Terminal (200) an mehrere Benutzer (300) umfassend
- ein mobiles, manipulations- und diebstahlgesichertes Terminal (200) für jeden Benutzer, jeweils umfassend
   - ein versiegeltes Gehäuse (210),
   - ein Mobilfunkmodul (220) mit einer eindeutigen Mobilfunkkennung (221) und einer Geräteadresse (222), das so konfiguriert ist, dass es ausschließlich eine permanente, gesicherte, verschlüsselte, gekapselte und drahtlose Verbindung (500) mit mindestens einem Server (610) in einem Datenzentrum (600) über einen privaten Zugangspunkt (510) eingeht,
   - ein in das versiegelte Gehäuse (210) integriertes Kartenlesemodul (230) zum Auslesen von Smartcards (231) und NFC-Karten (232),
   - ein Touchscreen (240) zur Anzeige von Informationen an und zur Eingabe von Daten durch den Benutzer auf einer graphischen Benutzeroberfläche (410) eines Anwendungsprogrammes (400),
   - ein Positionsbestimmungsmodul (250) zur Bestimmung einer geographischen Position des Terminals (200),
- mindestens einen Server (610) in einem Datenzentrum (600), der so konfiguriert ist, dass er die permanenten, gesicherten, verschlüsselten und gekapselten Verbindungen (500) mit jedem Terminal (200) und die Betriebszustände der Terminals (200) kontinuierlich überwacht,

wobei das Anwendungsprogramm (400) und die graphische Benutzeroberfläche (410) von einem auf dem mindestens einen Server (610) in dem Datenzentrum (600) laufenden Dienst (650) auf jedem Terminal (200) bereitgestellt und kontrolliert werden;
wobei das Anwendungsprogramm (400) so konfiguriert ist, dass es die während einer Sitzung eines Benutzers (300) generierten Daten nach Beendigung der Sitzung löscht,
wobei das Anwendungsprogramm (400) so konfiguriert ist, dass es jedes Terminal (200) sperrt, wenn die vom Positionsbestimmungsmodul (250) des jeweiligen Terminals erfassten Positionsdaten (251) außerhalb eines vordefinierten Bereichs liegen,
wobei der mindestens eine Server (610) so konfiguriert ist, dass er auf jedem Terminal (200) erstellte, signierte und verschlüsselte Datenpakete (520) über die jeweilige permanente, gesicherte, verschlüsselte und gekapselte Verbindung (500) empfängt und die Datenpakete (520) über einen mandantenfähigen verschlüsselten VPN-Tunnel (530) zu einem entfernten Netzwerk (150) des Dienstleistungsanbieters (100) komprimiert weitergibt und
wobei die permanente, gesicherte, verschlüsselte, gekapselte und drahtlose Verbindung (500) zwischen jedem Terminal (200) und dem mindestens einen Server (610) nur aufgebaut wird, wenn die eindeutige Mobilfunkkennung (221) des Mobilfunkmoduls (220) mit einer auf dem mindestens einen Server (610) hinterlegten, vordefinierten Mobilfunkkennung übereinstimmt und die Geräteadresse (222) des Mobilfunkmoduls (220) mit einer auf dem mindestens einen Server (610) hinterlegten, vordefinierten Geräteadresse übereinstimmt.

In dieser Ausführungsform kann das Anwendungsprogramm für jeden Benutzer auf dessen Terminal gleich oder unterschiedlich konfiguriert sein. Ferner ist jede permanente, gesicherte, verschlüsselte, gekapselte und drahtlose Verbindung (500) des Terminals mit dem mindestens einen Server (610) unabhängig voneinander. Es besteht keine Verbindungen zwischen den Terminals untereinander.

Ebenso betrifft die vorliegende Erfindung ein System (1) zur diskriminierungsfreien, sektorenübergreifenden, sicheren und mobilen Bereitstellung digitaler Dienstleistungen mehrerer Dienstleistungsanbieter (100) über ein mobiles, manipulations- und diebstahlgesichertes Terminal (200) an mehrere Benutzer (300) umfassend
- ein mobiles, manipulations- und diebstahlgesichertes Terminal (200) für jeden Benutzer, jeweils umfassend
   - ein versiegeltes Gehäuse (210),
   - ein Mobilfunkmodul (220) mit einer eindeutigen Mobilfunkkennung (221) und einer Geräteadresse (222), das so konfiguriert ist, dass es ausschließlich eine permanente, gesicherte, verschlüsselte, gekapselte und drahtlose Verbindung (500) mit mindestens einem Server (610) in einem Datenzentrum (600) über einen privaten Zugangspunkt (510) eingeht,
   - ein in das versiegelte Gehäuse (210) integriertes Kartenlesemodul (230) zum Auslesen von Smartcards (231) und NFC-Karten (232),
   - ein Touchscreen (240) zur Anzeige von Informationen an und zur Eingabe von Daten durch den Benutzer auf einer graphischen Benutzeroberfläche (410) eines Anwendungsprogrammes (400),
   - ein Positionsbestimmungsmodul (250) zur Bestimmung einer geographischen Position des Terminals (200),
- mindestens einen Server (610) in einem Datenzentrum (600), der so konfiguriert ist, dass er die permanente, gesicherte, verschlüsselte und gekapselte Verbindung (500) mit dem Terminal (200) und den Betriebszustand des Terminals (200) kontinuierlich überwacht,

wobei das Anwendungsprogramm (400) und die graphische Benutzeroberfläche (410) von einem auf dem mindestens einen Server (610) in dem Datenzentrum (600) laufenden Dienst (650) auf dem Terminal (200) bereitgestellt und kontrolliert werden; wobei das Anwendungsprogramm (400) so konfiguriert ist, dass es die während einer Sitzung eines Benutzers (300) generierten Daten nach Beendigung der Sitzung löscht,
wobei das Anwendungsprogramm (400) so konfiguriert ist, dass es das Terminal (200) sperrt, wenn die vom Positionsbestimmungsmodul (250) erfassten Positionsdaten (251) außerhalb eines vordefinierten Bereichs liegen,
wobei der mindestens eine Server (610) so konfiguriert ist, dass er auf jedem Terminal (200) erstellte, signierte und verschlüsselte Datenpakete (520) über die jeweilige permanente, gesicherte, verschlüsselte und gekapselte Verbindung (500) empfängt und die Datenpakete (520) über einen jeweiligen mandantenfähigen verschlüsselten VPN-Tunnel (530) zu einem entfernten Netzwerk (150) eines Dienstleistungsanbieters (100) komprimiert weitergibt und
wobei die permanente, gesicherte, verschlüsselte, gekapselte und drahtlose Verbindung (500) zwischen jedem Terminal (200) und dem mindestens einen Server (610) nur aufgebaut wird, wenn die eindeutige Mobilfunkkennung (221) des Mobilfunkmoduls (220) mit einer auf dem mindestens einen Server (610) hinterlegten, vordefinierten Mobilfunkkennung übereinstimmt und die Geräteadresse (222) des Mobilfunkmoduls (220) mit einer auf dem mindestens einen Server (610) hinterlegten, vordefinierten Geräteadresse übereinstimmt.

Das Positionsbestimmungsmodul des Terminals besteht typischerweise aus einem GPS-Empfänger, kann aber auch andere Ortungsdienste, wie Galileo oder Glonass umfassen. Innerhalb von Gebäuden kann die Ortung aber auch auf WLAN, Beacons oder bereits vorhandenen Infrastrukturelementen, wie mit Bluetooth oder WLAN ausgerüsteten Rauchmeldern oder dergleichen basieren. Selbstverständlich ist auch eine Kombinationen von Outdoor- und Indoor-Ortungsdiensten möglich.

In einer bevorzugten Ausführungsform umfasst der mindestens eine Server (610) im Datenzentrum (600) eine Firewall (611), einen App-Server (612), einen Web-Proxy-Server (613) und einen E-Mail-Relais-Server (614). Somit umfasst das System zur diskriminierungsfreien, sicheren und mobilen Bereitstellung digitaler Dienstleistungen eines Dienstleistungsanbieters über ein mobiles, manipulations- und diebstahlgesichertes Terminal an einen Benutzer vorzugsweise
- ein mobiles, manipulations- und diebstahlgesichertes Terminal umfassend
   - ein versiegeltes Gehäuse,
   - ein Mobilfunkmodul mit einer eindeutigen Mobilfunkkennung und einer Geräteadresse, das so konfiguriert ist, dass es ausschließlich eine permanente, gesicherte, verschlüsselte, gekapselte und drahtlose Verbindung mit mindestens einem Server in einem Datenzentrum über einen privaten Zugangspunkt eingeht,
   - ein in das versiegelte Gehäuse integriertes Kartenlesemodul zum Auslesen von Smartcards und NFC-Karten,
   - ein Touchscreen zur Anzeige von Informationen an und zur Eingabe von Daten durch den Benutzer auf einer graphischen Benutzeroberfläche eines Anwendungsprogrammes,
   - ein Positionsbestimmungsmodul zur Bestimmung einer geographischen Position des Terminals,
- mindestens einen Server in einem Datenzentrum, der so konfiguriert ist, dass er die permanente, gesicherte, verschlüsselte und gekapselte Verbindung mit dem Terminal und den Betriebszustand des Terminals kontinuierlich überwacht,

wobei das Anwendungsprogramm und die graphische Benutzeroberfläche von einem auf dem mindestens einen Server in dem Datenzentrum laufenden Dienst auf dem Terminal bereitgestellt und kontrolliert werden;
wobei das Anwendungsprogramm so konfiguriert ist, dass es die während einer Sitzung eines Benutzers generierten Daten nach Beendigung der Sitzung löscht, wobei das Anwendungsprogramm so konfiguriert ist, dass es das Terminal sperrt, wenn die vom Positionsbestimmungsmodul erfassten Positionsdaten außerhalb eines vordefinierten Bereichs liegen,
wobei der mindestens eine Server so konfiguriert ist, dass er auf dem Terminal erstellte, signierte und verschlüsselte Datenpakete über die permanente, gesicherte, verschlüsselte und gekapselte Verbindung empfängt und die Datenpakete über einen mandantenfähigen verschlüsselten VPN-Tunnel zu einem entfernten Netzwerk des Dienstleistungsanbieters komprimiert weitergibt
wobei die permanente, gesicherte, verschlüsselte, gekapselte und drahtlose Verbindung zwischen dem Terminal und dem mindestens einen Server nur aufgebaut wird, wenn die eindeutige Mobilfunkkennung des Mobilfunkmoduls mit einer auf dem mindestens einen Server hinterlegten, vordefinierten Mobilfunkkennung übereinstimmt und die Geräteadresse des Mobilfunkmoduls mit einer auf dem mindestens einen Server hinterlegten, vordefinierten Geräteadresse übereinstimmt, und
wobei der mindestens eine Server im Datenzentrum eine Firewall, einen App-Server, einen Web-Proxy-Server und einen E-Mail-Relais-Server umfasst.

In anderen Worten umfasst das System zur diskriminierungsfreien, sicheren und mobilen Bereitstellung digitaler Dienstleistungen eines Dienstleistungsanbieters über ein mobiles, manipulations- und diebstahlgesichertes Terminal an einen Benutzer vorzugsweise
- ein mobiles, manipulations- und diebstahlgesichertes Terminal umfassend
   - ein versiegeltes Gehäuse,
   - ein Mobilfunkmodul mit einer eindeutigen Mobilfunkkennung und einer Geräteadresse, das so konfiguriert ist, dass es ausschließlich eine permanente, gesicherte, verschlüsselte, gekapselte und drahtlose Verbindung mit einem App-Server in einem Datenzentrum über einen privaten Zugangspunkt eingeht,
   - ein in das versiegelte Gehäuse integriertes Kartenlesemodul zum Auslesen von Smartcards und NFC-Karten,
   - ein Touchscreen zur Anzeige von Informationen an und zur Eingabe von Daten durch den Benutzer auf einer graphischen Benutzeroberfläche eines Anwendungsprogrammes,
   - ein Positionsbestimmungsmodul zur Bestimmung einer geographischen Position des Terminals,
- einen App-Server in einem Datenzentrum, der so konfiguriert ist, dass er die permanente, gesicherte, verschlüsselte und gekapselte Verbindung mit dem Terminal und den Betriebszustand des Terminals kontinuierlich überwacht,
- eine Firewall im Datenzentrum,
- einen Web-Proxy-Server im Datenzentrum,
- einen E-Mail-Relais-Server im Datenzentrum,

wobei das Anwendungsprogramm und die graphische Benutzeroberfläche von einem auf dem App-Server laufenden Dienst auf dem Terminal bereitgestellt und kontrolliert werden;
wobei das Anwendungsprogramm so konfiguriert ist, dass es die während einer Sitzung eines Benutzers generierten Daten nach Beendigung der Sitzung löscht, wobei das Anwendungsprogramm so konfiguriert ist, dass es das Terminal sperrt, wenn die vom Positionsbestimmungsmodul erfassten Positionsdaten außerhalb eines vordefinierten Bereichs liegen,
wobei der App-Server so konfiguriert ist, dass er auf dem Terminal erstellte, signierte und verschlüsselte Datenpakete über die permanente, gesicherte, verschlüsselte und gekapselte Verbindung empfängt und die Datenpakete über einen mandantenfähigen verschlüsselten VPN-Tunnel zu einem entfernten Netzwerk des Dienstleistungsanbieters komprimiert weitergibt und
wobei die permanente, gesicherte, verschlüsselte, gekapselte und drahtlose Verbindung zwischen dem Terminal und dem App-Server nur aufgebaut wird, wenn die eindeutige Mobilfunkkennung des Mobilfunkmoduls mit einer auf dem mindestens einen Server hinterlegten, vordefinierten Mobilfunkkennung übereinstimmt und die Geräteadresse des Mobilfunkmoduls mit einer auf dem mindestens einen Server hinterlegten, vordefinierten Geräteadresse übereinstimmt.

In einer weiter bevorzugten Ausführungsform besteht die die Verbindung zwischen dem privaten Zugangspunkt und dem Datenzentrum über einen VPN-Tunnel, wodurch die Sicherheit der Datenübertragung erhöht wird. Somit umfasst das System zur diskriminierungsfreien, sicheren und mobilen Bereitstellung digitaler Dienstleistungen eines Dienstleistungsanbieters über ein mobiles, manipulations- und diebstahlgesichertes Terminal an einen Benutzer vorzugsweise
- ein mobiles, manipulations- und diebstahlgesichertes Terminal umfassend
   - ein versiegeltes Gehäuse,
   - ein Mobilfunkmodul mit einer eindeutigen Mobilfunkkennung und einer Geräteadresse, das so konfiguriert ist, dass es ausschließlich eine permanente, gesicherte, verschlüsselte, gekapselte und drahtlose Verbindung mit mindestens einem Server in einem Datenzentrum über einen privaten Zugangspunkt eingeht,
   - ein in das versiegelte Gehäuse integriertes Kartenlesemodul zum Auslesen von Smartcards und NFC-Karten,
   - ein Touchscreen zur Anzeige von Informationen an und zur Eingabe von Daten durch den Benutzer auf einer graphischen Benutzeroberfläche eines Anwendungsprogrammes,
   - ein Positionsbestimmungsmodul zur Bestimmung einer geographischen Position des Terminals,
- mindestens einen Server in einem Datenzentrum, der so konfiguriert ist, dass er die permanente, gesicherte, verschlüsselte und gekapselte Verbindung mit dem Terminal und den Betriebszustand des Terminals kontinuierlich überwacht,

wobei das Anwendungsprogramm und die graphische Benutzeroberfläche von einem auf dem mindestens einen Server in dem Datenzentrum laufenden Dienst auf dem Terminal bereitgestellt und kontrolliert werden;
wobei das Anwendungsprogramm so konfiguriert ist, dass es die während einer Sitzung eines Benutzers generierten Daten nach Beendigung der Sitzung löscht, wobei das Anwendungsprogramm so konfiguriert ist, dass es das Terminal sperrt, wenn die vom Positionsbestimmungsmodul erfassten Positionsdaten außerhalb eines vordefinierten Bereichs liegen,
wobei der mindestens eine Server so konfiguriert ist, dass er auf dem Terminal erstellte, signierte und verschlüsselte Datenpakete über die permanente, gesicherte, verschlüsselte und gekapselte Verbindung empfängt und die Datenpakete über einen mandantenfähigen verschlüsselten VPN-Tunnel zu einem entfernten Netzwerk des Dienstleistungsanbieters komprimiert weitergibt
wobei die permanente, gesicherte, verschlüsselte, gekapselte und drahtlose Verbindung zwischen dem Terminal und dem mindestens einen Server nur aufgebaut wird, wenn die eindeutige Mobilfunkkennung des Mobilfunkmoduls mit einer auf dem mindestens einen Server hinterlegten, vordefinierten Mobilfunkkennung übereinstimmt und die Geräteadresse des Mobilfunkmoduls mit einer auf dem mindestens einen Server hinterlegten, vordefinierten Geräteadresse übereinstimmt, und
wobei die Verbindung zwischen dem privaten Zugangspunkt und dem mindestens einen Server im Datenzentrum über einen VPN-Tunnel erfolgt.

In einer weiteren bevorzugten Ausführungsform umfasst das mobile, manipulations- und diebstahlgesicherte Terminal ferner eine integrierte Kamera zur Aufnahme von Videos und Bildern und zum Scannen von Dokumenten und mindestens einen integrierten Lautsprecher. Somit umfasst das System zur diskriminierungsfreien, sicheren und mobilen Bereitstellung digitaler Dienstleistungen eines Dienstleistungsanbieters über ein mobiles, manipulations- und diebstahlgesichertes Terminal an einen Benutzer vorzugsweise
- ein mobiles, manipulations- und diebstahlgesichertes Terminal umfassend
   - ein versiegeltes Gehäuse,
   - ein Mobilfunkmodul mit einer eindeutigen Mobilfunkkennung und einer Geräteadresse, das so konfiguriert ist, dass es ausschließlich eine permanente, gesicherte, verschlüsselte, gekapselte und drahtlose Verbindung mit mindestens einem Server in einem Datenzentrum über einen privaten Zugangspunkt eingeht,
   - ein in das versiegelte Gehäuse integriertes Kartenlesemodul zum Auslesen von Smartcards und NFC-Karten,
   - ein Touchscreen zur Anzeige von Informationen an und zur Eingabe von Daten durch den Benutzer auf einer graphischen Benutzeroberfläche eines Anwendungsprogrammes,
   - ein Positionsbestimmungsmodul zur Bestimmung einer geographischen Position des Terminals,
- mindestens einen Server in einem Datenzentrum, der so konfiguriert ist, dass er die permanente, gesicherte, verschlüsselte und gekapselte Verbindung mit dem Terminal und den Betriebszustand des Terminals kontinuierlich überwacht,

wobei das Anwendungsprogramm und die graphische Benutzeroberfläche von einem auf dem mindestens einen Server in dem Datenzentrum laufenden Dienst auf dem Terminal bereitgestellt und kontrolliert werden;
wobei das Anwendungsprogramm so konfiguriert ist, dass es die während einer Sitzung eines Benutzers generierten Daten nach Beendigung der Sitzung löscht, wobei das Anwendungsprogramm so konfiguriert ist, dass es das Terminal sperrt, wenn die vom Positionsbestimmungsmodul erfassten Positionsdaten außerhalb eines vordefinierten Bereichs liegen,
wobei der mindestens eine Server so konfiguriert ist, dass er auf dem Terminal erstellte, signierte und verschlüsselte Datenpakete über die permanente, gesicherte, verschlüsselte und gekapselte Verbindung empfängt und die Datenpakete über einen mandantenfähigen verschlüsselten VPN-Tunnel zu einem entfernten Netzwerk des Dienstleistungsanbieters komprimiert weitergibt,
wobei die permanente, gesicherte, verschlüsselte, gekapselte und drahtlose Verbindung zwischen dem Terminal und dem mindestens einen Server nur aufgebaut wird, wenn die eindeutige Mobilfunkkennung des Mobilfunkmoduls mit einer auf dem mindestens einen Server hinterlegten, vordefinierten Mobilfunkkennung übereinstimmt und die Geräteadresse des Mobilfunkmoduls mit einer auf dem mindestens einen Server hinterlegten, vordefinierten Geräteadresse übereinstimmt, und
wobei das mobile, manipulations- und diebstahlgesicherte Terminal ferner eine integrierte Kamera zur Aufnahme von Videos und Bildern und zum Scannen von Dokumenten und mindestens einen integrierten Lautsprecher umfasst.

In einer bevorzugten Ausführungsfrom umfasst das System zur diskriminierungsfreien, sicheren und mobilen Bereitstellung digitaler Dienstleistungen eines Dienstleistungsanbieters über ein mobiles, manipulations- und diebstahlgesichertes Terminal an einen Benutzer
- ein mobiles, manipulations- und diebstahlgesichertes Terminal umfassend
   - ein versiegeltes Gehäuse,
   - ein Mobilfunkmodul mit einer eindeutigen Mobilfunkkennung und einer Geräteadresse, das so konfiguriert ist, dass es ausschließlich eine permanente, gesicherte, verschlüsselte, gekapselte und drahtlose Verbindung mit mindestens einem Server in einem Datenzentrum über einen privaten Zugangspunkt eingeht,
   - ein in das versiegelte Gehäuse integriertes Kartenlesemodul zum Auslesen von Smartcards und NFC-Karten,
   - ein Touchscreen zur Anzeige von Informationen an und zur Eingabe von Daten durch den Benutzer auf einer graphischen Benutzeroberfläche eines Anwendungsprogrammes,
   - ein Positionsbestimmungsmodul zur Bestimmung einer geographischen Position des Terminals,
- mindestens einen Server in einem Datenzentrum, der so konfiguriert ist, dass er die permanente, gesicherte, verschlüsselte und gekapselte Verbindung mit dem Terminal und den Betriebszustand des Terminals kontinuierlich überwacht,

wobei das Anwendungsprogramm und die graphische Benutzeroberfläche von einem auf dem mindestens einen Server in dem Datenzentrum laufenden Dienst auf dem Terminal bereitgestellt und kontrolliert werden;
wobei das Anwendungsprogramm so konfiguriert ist, dass es die während einer Sitzung eines Benutzers generierten Daten nach Beendigung der Sitzung löscht, wobei das Anwendungsprogramm so konfiguriert ist, dass es das Terminal sperrt, wenn die vom Positionsbestimmungsmodul erfassten Positionsdaten außerhalb eines vordefinierten Bereichs liegen,
wobei der mindestens eine Server so konfiguriert ist, dass er auf dem Terminal erstellte, signierte und verschlüsselte Datenpakete über die permanente, gesicherte, verschlüsselte und gekapselte Verbindung empfängt und die Datenpakete über einen mandantenfähigen verschlüsselten VPN-Tunnel zu einem entfernten Netzwerk des Dienstleistungsanbieters komprimiert weitergibt,
wobei die permanente, gesicherte, verschlüsselte, gekapselte und drahtlose Verbindung zwischen dem Terminal und dem mindestens einen Server nur aufgebaut wird, wenn die eindeutige Mobilfunkkennung des Mobilfunkmoduls mit einer auf dem mindestens einen Server hinterlegten, vordefinierten Mobilfunkkennung übereinstimmt und die Geräteadresse des Mobilfunkmoduls mit einer auf dem mindestens einen Server hinterlegten, vordefinierten Geräteadresse übereinstimmt, und
wobei das mobile, manipulations- und diebstahlgesicherte Terminal ferner eine integrierte Kamera zur Aufnahme von Videos und Bildern und zum Scannen von Dokumenten, mindestens einen integrierten Lautsprecher und mindestens ein integriertes Mikrofon umfasst.

In einer weiteren bevorzugten Ausführungsform läuft das Anwendungsprogramm des mobilen Terminals in einem Mehrbenutzer-Kioskmodus. Der Kioskmodus sichert das Terminal vor unbefugten Zugriff ab, indem es den Zugang zu Systemdiensten unterbindet. Dabei ist das Anwendungsprogramm speziell auf die Nutzung durch mehrere Personen optimiert, indem es beispielsweise Sitzungen automatisch beendet und/oder die vom Benutzer generierten Daten nach dem Beenden einer Sitzung oder Interaktion automatisch löscht. Vorzugsweise ist das Anwendungsprogramm zusätzlich mit automatisch ausgeführten Routinen ausgestattet, die für einen Grad an selbstständiger Fehlerbehebung und Toleranz sorgen. Somit umfasst das System zur diskriminierungsfreien, sicheren und mobilen Bereitstellung digitaler Dienstleistungen eines Dienstleistungsanbieters über ein mobiles, manipulations- und diebstahlgesichertes Terminal an einen Benutzer vorzugsweise
- ein mobiles, manipulations- und diebstahlgesichertes Terminal umfassend
   - ein versiegeltes Gehäuse,
   - ein Mobilfunkmodul mit einer eindeutigen Mobilfunkkennung und einer Geräteadresse, das so konfiguriert ist, dass es ausschließlich eine permanente, gesicherte, verschlüsselte, gekapselte und drahtlose Verbindung mit mindestens einem Server in einem Datenzentrum über einen privaten Zugangspunkt eingeht,
   - ein in das versiegelte Gehäuse integriertes Kartenlesemodul zum Auslesen von Smartcards und NFC-Karten,
   - ein Touchscreen zur Anzeige von Informationen an und zur Eingabe von Daten durch den Benutzer auf einer graphischen Benutzeroberfläche eines Anwendungsprogrammes,
   - ein Positionsbestimmungsmodul zur Bestimmung einer geographischen Position des Terminals,
- mindestens einen Server in einem Datenzentrum, der so konfiguriert ist, dass er die permanente, gesicherte, verschlüsselte und gekapselte Verbindung mit dem Terminal und den Betriebszustand des Terminals kontinuierlich überwacht,

wobei das Anwendungsprogramm und die graphische Benutzeroberfläche von einem auf dem mindestens einen Server in dem Datenzentrum laufenden Dienst auf dem Terminal bereitgestellt und kontrolliert werden;
wobei das Anwendungsprogramm so konfiguriert ist, dass es die während einer Sitzung eines Benutzers generierten Daten nach Beendigung der Sitzung löscht, wobei das Anwendungsprogramm so konfiguriert ist, dass es das Terminal sperrt, wenn die vom Positionsbestimmungsmodul erfassten Positionsdaten außerhalb eines vordefinierten Bereichs liegen,
wobei der mindestens eine Server so konfiguriert ist, dass er auf dem Terminal erstellte, signierte und verschlüsselte Datenpakete über die permanente, gesicherte, verschlüsselte und gekapselte Verbindung empfängt und die Datenpakete über einen mandantenfähigen verschlüsselten VPN-Tunnel zu einem entfernten Netzwerk des Dienstleistungsanbieters komprimiert weitergibt
wobei die permanente, gesicherte, verschlüsselte, gekapselte und drahtlose Verbindung zwischen dem Terminal und dem mindestens einen Server nur aufgebaut wird, wenn die eindeutige Mobilfunkkennung des Mobilfunkmoduls mit einer auf dem mindestens einen Server hinterlegten, vordefinierten Mobilfunkkennung übereinstimmt und die Geräteadresse des Mobilfunkmoduls mit einer auf dem mindestens einen Server hinterlegten, vordefinierten Geräteadresse übereinstimmt, und
wobei das Anwendungsprogramm des mobilen Terminals in einem Mehrbenutzer-Kioskmodus läuft.

In einer weiteren bevorzugten Ausführungsform ist das Anwendungsprogramm so konfiguriert, dass es bei Abwesenheit des Benutzers vom Terminal die Sitzung nach Ablauf einer vordefinierten Dauer automatisch beendet, sofern nicht innerhalb dieser Dauer eine erneute Identifikation erfolgt. Somit umfasst das System zur diskriminierungsfreien, sicheren und mobilen Bereitstellung digitaler Dienstleistungen eines Dienstleistungsanbieters über ein mobiles, manipulations- und diebstahlgesichertes Terminal an einen Benutzer vorzugsweise
- ein mobiles, manipulations- und diebstahlgesichertes Terminal umfassend
   - ein versiegeltes Gehäuse,
   - ein Mobilfunkmodul mit einer eindeutigen Mobilfunkkennung und einer Geräteadresse, das so konfiguriert ist, dass es ausschließlich eine permanente, gesicherte, verschlüsselte, gekapselte und drahtlose Verbindung mit mindestens einem Server in einem Datenzentrum über einen privaten Zugangspunkt eingeht,
   - ein in das versiegelte Gehäuse integriertes Kartenlesemodul zum Auslesen von Smartcards und NFC-Karten,
   - ein Touchscreen zur Anzeige von Informationen an und zur Eingabe von Daten durch den Benutzer auf einer graphischen Benutzeroberfläche eines Anwendungsprogrammes,
   - ein Positionsbestimmungsmodul zur Bestimmung einer geographischen Position des Terminals,
- mindestens einen Server in einem Datenzentrum, der so konfiguriert ist, dass er die permanente, gesicherte, verschlüsselte und gekapselte Verbindung mit dem Terminal und den Betriebszustand des Terminals kontinuierlich überwacht,

wobei das Anwendungsprogramm und die graphische Benutzeroberfläche von einem auf dem mindestens einen Server in dem Datenzentrum laufenden Dienst auf dem Terminal bereitgestellt und kontrolliert werden;
wobei das Anwendungsprogramm so konfiguriert ist, dass es die während einer Sitzung eines Benutzers generierten Daten nach Beendigung der Sitzung löscht, wobei das Anwendungsprogramm so konfiguriert ist, dass es das Terminal sperrt, wenn die vom Positionsbestimmungsmodul erfassten Positionsdaten außerhalb eines vordefinierten Bereichs liegen,
wobei das Anwendungsprogramm so konfiguriert, dass es bei Abwesenheit des Benutzers vom Terminal die Sitzung nach Ablauf einer vordefinierten Dauer automatisch beendet, sofern nicht innerhalb dieser Dauer eine erneute Identifikation erfolgt,
wobei der mindestens eine Server so konfiguriert ist, dass er auf dem Terminal erstellte, signierte und verschlüsselte Datenpakete über die permanente, gesicherte, verschlüsselte und gekapselte Verbindung empfängt und die Datenpakete über einen mandantenfähigen verschlüsselten VPN-Tunnel zu einem entfernten Netzwerk des Dienstleistungsanbieters komprimiert weitergibt, und
wobei die permanente, gesicherte, verschlüsselte, gekapselte und drahtlose Verbindung zwischen dem Terminal und dem mindestens einen Server nur aufgebaut wird, wenn die eindeutige Mobilfunkkennung des Mobilfunkmoduls mit einer auf dem mindestens einen Server hinterlegten, vordefinierten Mobilfunkkennung übereinstimmt und die Geräteadresse des Mobilfunkmoduls mit einer auf dem mindestens einen Server hinterlegten, vordefinierten Geräteadresse übereinstimmt.

In einer weiteren bevorzugten Ausführungsform ist der Touchscreen so konfiguriert, dass er Unterschriften erfassen kann. Mittels der digitalen Signaturmöglichkeiten können beispielsweise Formulare wie ein Familienfragebogen oder Anträge vom Anwender einfach bearbeitet und online fallabschließend inkl. Gebührenzahlung übermittelt werden. Somit umfasst das System zur diskriminierungsfreien, sicheren und mobilen Bereitstellung digitaler Dienstleistungen eines Dienstleistungsanbieters über ein mobiles, manipulations- und diebstahlgesichertes Terminal an einen Benutzer vorzugsweise
- ein mobiles, manipulations- und diebstahlgesichertes Terminal umfassend
   - ein versiegeltes Gehäuse,
   - ein Mobilfunkmodul mit einer eindeutigen Mobilfunkkennung und einer Geräteadresse, das so konfiguriert ist, dass es ausschließlich eine permanente, gesicherte, verschlüsselte, gekapselte und drahtlose Verbindung mit mindestens einem Server in einem Datenzentrum über einen privaten Zugangspunkt eingeht,
   - ein in das versiegelte Gehäuse integriertes Kartenlesemodul zum Auslesen von Smartcards und NFC-Karten,
   - ein Touchscreen zur Anzeige von Informationen an und zur Eingabe von Daten durch den Benutzer auf einer graphischen Benutzeroberfläche eines Anwendungsprogrammes,
   - ein Positionsbestimmungsmodul zur Bestimmung einer geographischen Position des Terminals,
- mindestens einen Server in einem Datenzentrum, der so konfiguriert ist, dass er die permanente, gesicherte, verschlüsselte und gekapselte Verbindung mit dem Terminal und den Betriebszustand des Terminals kontinuierlich überwacht,

wobei das Anwendungsprogramm und die graphische Benutzeroberfläche von einem auf dem mindestens einen Server in dem Datenzentrum laufenden Dienst auf dem Terminal bereitgestellt und kontrolliert werden;
wobei das Anwendungsprogramm so konfiguriert ist, dass es die während einer Sitzung eines Benutzers generierten Daten nach Beendigung der Sitzung löscht, wobei das Anwendungsprogramm so konfiguriert ist, dass es das Terminal sperrt, wenn die vom Positionsbestimmungsmodul erfassten Positionsdaten außerhalb eines vordefinierten Bereichs liegen,
wobei der mindestens eine Server so konfiguriert ist, dass er auf dem Terminal erstellte, signierte und verschlüsselte Datenpakete über die permanente, gesicherte, verschlüsselte und gekapselte Verbindung empfängt und die Datenpakete über einen mandantenfähigen verschlüsselten VPN-Tunnel zu einem entfernten Netzwerk des Dienstleistungsanbieters komprimiert weitergibt
wobei die permanente, gesicherte, verschlüsselte, gekapselte und drahtlose Verbindung zwischen dem Terminal und dem mindestens einen Server nur aufgebaut wird, wenn die eindeutige Mobilfunkkennung des Mobilfunkmoduls mit einer auf dem mindestens einen Server hinterlegten, vordefinierten Mobilfunkkennung übereinstimmt und die Geräteadresse des Mobilfunkmoduls mit einer auf dem mindestens einen Server hinterlegten, vordefinierten Geräteadresse übereinstimmt, und
wobei das Terminal über den Touchscreen Unterschriften erfassen kann.

In einer bevorzugten Ausführungsform handelt es sich bei dem Terminal um ein elektronisches Mobilgerät wie beispielsweise ein Tablet, ein Smartphone, ein Phablet oder ein Convertible. Besonders bevorzugt sind Tablets als mobile Terminals. Somit umfasst das System zur diskriminierungsfreien, sicheren und mobilen Bereitstellung digitaler Dienstleistungen eines Dienstleistungsanbieters über ein mobiles, manipulations- und diebstahlgesichertes Tablet an einen Benutzer vorzugsweise
- ein mobiles, manipulations- und diebstahlgesichertes Tablet umfassend
   - ein versiegeltes Gehäuse,
   - ein Mobilfunkmodul mit einer eindeutigen Mobilfunkkennung und einer Geräteadresse, das so konfiguriert ist, dass es ausschließlich eine permanente, gesicherte, verschlüsselte, gekapselte und drahtlose Verbindung mit mindestens einem Server in einem Datenzentrum über einen privaten Zugangspunkt eingeht,
   - ein in das versiegelte Gehäuse integriertes Kartenlesemodul zum Auslesen von Smartcards und NFC-Karten,
   - ein Touchscreen zur Anzeige von Informationen an und zur Eingabe von Daten durch den Benutzer auf einer graphischen Benutzeroberfläche eines Anwendungsprogrammes,
   - ein Positionsbestimmungsmodul zur Bestimmung einer geographischen Position des Tablets,
- mindestens einen Server in einem Datenzentrum, der so konfiguriert ist, dass er die permanente, gesicherte, verschlüsselte und gekapselte Verbindung mit dem Tablet und den Betriebszustand des Tablets kontinuierlich überwacht,

wobei das Anwendungsprogramm und die graphische Benutzeroberfläche von einem auf dem mindestens einen Server in dem Datenzentrum laufenden Dienst auf dem Tablets bereitgestellt und kontrolliert werden;
wobei das Anwendungsprogramm so konfiguriert ist, dass es die während einer Sitzung eines Benutzers generierten Daten nach Beendigung der Sitzung löscht, wobei das Anwendungsprogramm so konfiguriert ist, dass es das Tablet sperrt, wenn die vom Positionsbestimmungsmodul erfassten Positionsdaten außerhalb eines vordefinierten Bereichs liegen,
wobei der mindestens eine Server so konfiguriert ist, dass er auf dem Tablet erstellte, signierte und verschlüsselte Datenpakete über die permanente, gesicherte, verschlüsselte und gekapselte Verbindung empfängt und die Datenpakete über einen mandantenfähigen verschlüsselten VPN-Tunnel zu einem entfernten Netzwerk des Dienstleistungsanbieters komprimiert weitergibt und
wobei die permanente, gesicherte, verschlüsselte, gekapselte und drahtlose Verbindung zwischen dem Tablet und dem mindestens einen Server nur aufgebaut wird, wenn die eindeutige Mobilfunkkennung des Mobilfunkmoduls mit einer auf dem mindestens einen Server hinterlegten, vordefinierten Mobilfunkkennung übereinstimmt und die Geräteadresse des Mobilfunkmoduls mit einer auf dem mindestens einen Server hinterlegten, vordefinierten Geräteadresse übereinstimmt.

In einer weiteren Ausführungsform ist das Tablet in einem Ständer umfassend eine Ladevorrichtung angeordnet. Der Ständer ist vorzugsweise so ausgestaltet, dass er das Tablet in einer Schräglage positioniert, die dem Benutzer das Bedienen des Tablets erleichtert, z.B. in dem das Terminal samt Ständer auf einem Tisch gestellt werden kann. Durch die Ladevorrichtung kann das Tablet bequem aufgeladen werden. Somit umfasst das System zur diskriminierungsfreien, sicheren und mobilen Bereitstellung digitaler Dienstleistungen eines Dienstleistungsanbieters über ein mobiles, manipulations- und diebstahlgesichertes Tablet an einen Benutzer vorzugsweise
- ein mobiles, manipulations- und diebstahlgesichertes Tablet umfassend
   - ein versiegeltes Gehäuse,
   - ein Mobilfunkmodul mit einer eindeutigen Mobilfunkkennung und einer Geräteadresse, das so konfiguriert ist, dass es ausschließlich eine permanente, gesicherte, verschlüsselte, gekapselte und drahtlose Verbindung mit mindestens einem Server in einem Datenzentrum über einen privaten Zugangspunkt eingeht,
   - ein in das versiegelte Gehäuse integriertes Kartenlesemodul zum Auslesen von Smartcards und NFC-Karten,
   - ein Touchscreen zur Anzeige von Informationen an und zur Eingabe von Daten durch den Benutzer auf einer graphischen Benutzeroberfläche eines Anwendungsprogrammes,
   - ein Positionsbestimmungsmodul zur Bestimmung einer geographischen Position des Tablets,
- mindestens einen Server in einem Datenzentrum, der so konfiguriert ist, dass er die permanente, gesicherte, verschlüsselte und gekapselte Verbindung mit dem Tablet und den Betriebszustand des Tablets kontinuierlich überwacht,

wobei das Anwendungsprogramm und die graphische Benutzeroberfläche von einem auf dem mindestens einen Server in dem Datenzentrum laufenden Dienst auf dem Tablets bereitgestellt und kontrolliert werden;
wobei das Anwendungsprogramm so konfiguriert ist, dass es die während einer Sitzung eines Benutzers generierten Daten nach Beendigung der Sitzung löscht, wobei das Anwendungsprogramm so konfiguriert ist, dass es das Tablet sperrt, wenn die vom Positionsbestimmungsmodul erfassten Positionsdaten außerhalb eines vordefinierten Bereichs liegen,
wobei der mindestens eine Server so konfiguriert ist, dass er auf dem Tablet erstellte, signierte und verschlüsselte Datenpakete über die permanente, gesicherte, verschlüsselte und gekapselte Verbindung empfängt und die Datenpakete über einen mandantenfähigen verschlüsselten VPN-Tunnel zu einem entfernten Netzwerk des Dienstleistungsanbieters komprimiert weitergibt,
wobei die permanente, gesicherte, verschlüsselte, gekapselte und drahtlose Verbindung zwischen dem Tablet und dem mindestens einen Server nur aufgebaut wird, wenn die eindeutige Mobilfunkkennung des Mobilfunkmoduls mit einer auf dem mindestens einen Server hinterlegten, vordefinierten Mobilfunkkennung übereinstimmt und die Geräteadresse des Mobilfunkmoduls mit einer auf dem mindestens einen Server hinterlegten, vordefinierten Geräteadresse übereinstimmt, und
wobei das Tablet in einem Ständer umfassend eine Ladevorrichtung angeordnet ist und ein oder mehrere elektrische Energiespeicher des Tablets mittels der Ladevorrichtung induktiv oder direkt mit einem angeschlossenen Kabel aufgeladen wird.

In einer weiteren Ausführungsform ist das Terminal in einer stationären Vorrichtung mit angeschlossener Peripherie-Hardware angeordnet. Dabei ist das Terminal vor Diebstahl oder Entwendung mittels mindestens einem Schloss gesichert. Die Peripherie-Hardware ist dazu über permanent überwachte USB-Verbindungen an das Terminal angeschlossen. Peripherie-Hardware können u.a. Eingabe- oder Ausgabegeräte sein, wie beispielsweise ein Sensor zur Feststellung der Anwesenheit des Benutzers, eine Porträt- und Aufbildkamera, ein biometrisches Signaturpad, ein Kartenlesegerät für Gematik (EGK), ein NFC-Lesegerät, ein POS-Zahlterminal, ein Kopfhörer, ein Hand-Scanner, ein Flachbettscanner, ein Touch-Bildschirm, Lautsprecher, Drucker oder Headset. In dieser Ausführungsform sind ebenfalls Geräte zur Erfassung von Körperzuständen mitanschließbar.

Somit betrifft die vorliegende Erfindung ein System (1) zur diskriminierungsfreien, sicheren und mobilen Bereitstellung digitaler Dienstleistungen eines Dienstleistungsanbieters (100) über ein mobiles, manipulations- und diebstahlgesichertes Terminal (200) an einen Benutzer (300) umfassend
- ein mobiles, manipulations- und diebstahlgesichertes in einer stationären Vorrichtung mit angeschlossener Peripherie-Hardware angeschlossenes Terminal (200) umfassend
   - ein versiegeltes Gehäuse (210),
   - ein Mobilfunkmodul (220) mit einer eindeutigen Mobilfunkkennung (221) und einer Geräteadresse (222), das so konfiguriert ist, dass es ausschließlich eine permanente, gesicherte, verschlüsselte, gekapselte und drahtlose Verbindung (500) mit mindestens einem Server (610) in einem Datenzentrum (600) über einen privaten Zugangspunkt (510) eingeht,
   - ein in das versiegelte Gehäuse (210) integriertes Kartenlesemodul (230) zum Auslesen von Smartcards (231) und NFC-Karten (232),
   - ein Touchscreen (240) zur Anzeige von Informationen an und zur Eingabe von Daten durch den Benutzer auf einer graphischen Benutzeroberfläche (410) eines Anwendungsprogrammes (400),
   - ein Positionsbestimmungsmodul (250) zur Bestimmung einer geographischen Position des Terminals (200),
- mindestens einen Server (610) in einem Datenzentrum (600), der so konfiguriert ist, dass er die permanente, gesicherte, verschlüsselte und gekapselte Verbindung (500) mit dem Terminal (200) und den Betriebszustand des Terminals (200) kontinuierlich überwacht,

wobei das Anwendungsprogramm (400) und die graphische Benutzeroberfläche (410) von einem auf dem mindestens einen Server (610) in dem Datenzentrum (600) laufenden Dienst (650) auf dem Terminal (200) bereitgestellt und kontrolliert werden; wobei das Anwendungsprogramm (400) so konfiguriert ist, dass es die während einer Sitzung eines Benutzers (300) generierten Daten nach Beendigung der Sitzung löscht,
wobei das Anwendungsprogramm (400) so konfiguriert ist, dass es das Terminal (200) sperrt, wenn die vom Positionsbestimmungsmodul (250) erfassten Positionsdaten (251) außerhalb eines vordefinierten Bereichs liegen,
wobei der mindestens eine Server (610) so konfiguriert ist, dass er auf dem Terminal (200) erstellte, signierte und verschlüsselte Datenpakete (520) über die permanente, gesicherte, verschlüsselte und gekapselte Verbindung (500) empfängt und die Datenpakete (520) über einen mandantenfähigen verschlüsselten VPN-Tunnel (530) zu einem entfernten Netzwerk (150) des Dienstleistungsanbieters (100) komprimiert weitergibt und
wobei die permanente, gesicherte, verschlüsselte, gekapselte und drahtlose Verbindung (500) zwischen dem Terminal (200) und dem mindestens einen Server (610) nur aufgebaut wird, wenn die eindeutige Mobilfunkkennung (221) des Mobilfunkmoduls (220) mit einer auf dem mindestens einen Server (610) hinterlegten, vordefinierten Mobilfunkkennung übereinstimmt und die Geräteadresse (222) des Mobilfunkmoduls (220) mit einer auf dem mindestens einen Server (610) hinterlegten, vordefinierten Geräteadresse übereinstimmt.

In einer bevorzugten Ausführungsform umfasst die stationäre Vorrichtung ein Dokumentenfach zur Ablage von Papieroriginalen.

Somit betrifft die vorliegende Erfindung ein System (1) zur diskriminierungsfreien, sicheren und mobilen Bereitstellung digitaler Dienstleistungen eines Dienstleistungsanbieters (100) über ein mobiles, manipulations- und diebstahlgesichertes Terminal (200) an einen Benutzer (300) umfassend
- ein mobiles, manipulations- und diebstahlgesichertes in einer stationären Vorrichtung mit angeschlossener Peripherie-Hardware angeschlossenes Terminal (200) umfassend
   - ein versiegeltes Gehäuse (210),
   - ein Mobilfunkmodul (220) mit einer eindeutigen Mobilfunkkennung (221) und einer Geräteadresse (222), das so konfiguriert ist, dass es ausschließlich eine permanente, gesicherte, verschlüsselte, gekapselte und drahtlose Verbindung (500) mit mindestens einem Server (610) in einem Datenzentrum (600) über einen privaten Zugangspunkt (510) eingeht,
   - ein in das versiegelte Gehäuse (210) integriertes Kartenlesemodul (230) zum Auslesen von Smartcards (231) und NFC-Karten (232),
   - ein Touchscreen (240) zur Anzeige von Informationen an und zur Eingabe von Daten durch den Benutzer auf einer graphischen Benutzeroberfläche (410) eines Anwendungsprogrammes (400),
   - ein Positionsbestimmungsmodul (250) zur Bestimmung einer geographischen Position des Terminals (200),
- mindestens einen Server (610) in einem Datenzentrum (600), der so konfiguriert ist, dass er die permanente, gesicherte, verschlüsselte und gekapselte Verbindung (500) mit dem Terminal (200) und den Betriebszustand des Terminals (200) kontinuierlich überwacht,

wobei das Anwendungsprogramm (400) und die graphische Benutzeroberfläche (410) von einem auf dem mindestens einen Server (610) in dem Datenzentrum (600) laufenden Dienst (650) auf dem Terminal (200) bereitgestellt und kontrolliert werden; wobei das Anwendungsprogramm (400) so konfiguriert ist, dass es die während einer Sitzung eines Benutzers (300) generierten Daten nach Beendigung der Sitzung löscht,
wobei das Anwendungsprogramm (400) so konfiguriert ist, dass es das Terminal (200) sperrt, wenn die vom Positionsbestimmungsmodul (250) erfassten Positionsdaten (251) außerhalb eines vordefinierten Bereichs liegen,
wobei der mindestens eine Server (610) so konfiguriert ist, dass er auf dem Terminal (200) erstellte, signierte und verschlüsselte Datenpakete (520) über die permanente, gesicherte, verschlüsselte und gekapselte Verbindung (500) empfängt und die Datenpakete (520) über einen mandantenfähigen verschlüsselten VPN-Tunnel (530) zu einem entfernten Netzwerk (150) des Dienstleistungsanbieters (100) komprimiert weitergibt,
wobei die permanente, gesicherte, verschlüsselte, gekapselte und drahtlose Verbindung (500) zwischen dem Terminal (200) und dem mindestens einen Server (610) nur aufgebaut wird, wenn die eindeutige Mobilfunkkennung (221) des Mobilfunkmoduls (220) mit einer auf dem mindestens einen Server (610) hinterlegten, vordefinierten Mobilfunkkennung übereinstimmt und die Geräteadresse (222) des Mobilfunkmoduls (220) mit einer auf dem mindestens einen Server (610) hinterlegten, vordefinierten Geräteadresse übereinstimmt, und
wobei die stationäre Vorrichtung ein Dokumentenfach zur Ablage von Papieroriginalen.

In einer weiteren bevorzugten Ausführungsform ist das Anwendungsprogramm so konfiguriert ist, dass es auf dem Touchscreen des Terminals bei Nichtbenutzung durch einen Benutzer vom Dienstleistungsanbieter durch die permanente, gesicherte, verschlüsselte und gekapselte Verbindung über den mindestens einen Server in dem Datenzentrum bereitgestellte Informationen ausgibt (Infotainment). Somit umfasst das System zur diskriminierungsfreien, sicheren und mobilen Bereitstellung digitaler Dienstleistungen eines Dienstleistungsanbieters über ein mobiles, manipulations- und diebstahlgesichertes Terminal an einen Benutzer vorzugsweise
- ein mobiles, manipulations- und diebstahlgesichertes Terminal umfassend
   - ein versiegeltes Gehäuse,
   - ein Mobilfunkmodul mit einer eindeutigen Mobilfunkkennung und einer Geräteadresse, das so konfiguriert ist, dass es ausschließlich eine permanente, gesicherte, verschlüsselte, gekapselte und drahtlose Verbindung mit mindestens einem Server in einem Datenzentrum über einen privaten Zugangspunkt eingeht,
   - ein in das versiegelte Gehäuse integriertes Kartenlesemodul zum Auslesen von Smartcards und NFC-Karten,
   - ein Touchscreen zur Anzeige von Informationen an und zur Eingabe von Daten durch den Benutzer auf einer graphischen Benutzeroberfläche eines Anwendungsprogrammes,
   - ein Positionsbestimmungsmodul zur Bestimmung einer geographischen Position des Terminals,
- mindestens einen Server in einem Datenzentrum, der so konfiguriert ist, dass er die permanente, gesicherte, verschlüsselte und gekapselte Verbindung mit dem Terminal und den Betriebszustand des Terminals kontinuierlich überwacht,

wobei das Anwendungsprogramm und die graphische Benutzeroberfläche von einem auf dem mindestens einen Server in dem Datenzentrum laufenden Dienst auf dem Terminal bereitgestellt und kontrolliert werden;
wobei das Anwendungsprogramm so konfiguriert ist, dass es die während einer Sitzung eines Benutzers generierten Daten nach Beendigung der Sitzung löscht,
wobei das Anwendungsprogramm so konfiguriert ist, dass es das Terminal sperrt, wenn die vom Positionsbestimmungsmodul erfassten Positionsdaten außerhalb eines vordefinierten Bereichs liegen,
wobei der mindestens eine Server so konfiguriert ist, dass er auf dem Terminal erstellte, signierte und verschlüsselte Datenpakete über die permanente, gesicherte, verschlüsselte und gekapselte Verbindung empfängt und die Datenpakete über einen mandantenfähigen verschlüsselten VPN-Tunnel zu einem entfernten Netzwerk des Dienstleistungsanbieters komprimiert weitergibt
wobei die permanente, gesicherte, verschlüsselte, gekapselte und drahtlose Verbindung zwischen dem Terminal und dem mindestens einen Server nur aufgebaut wird, wenn die eindeutige Mobilfunkkennung des Mobilfunkmoduls mit einer auf dem mindestens einen Server hinterlegten, vordefinierten Mobilfunkkennung übereinstimmt und die Geräteadresse des Mobilfunkmoduls mit einer auf dem mindestens einen Server hinterlegten, vordefinierten Geräteadresse übereinstimmt, und
wobei das Anwendungsprogramm so konfiguriert ist, dass es auf dem Touchscreen des Terminals bei Nichtbenutzung durch einen Benutzer vom Dienstleistungsanbieter durch die permanente, gesicherte, verschlüsselte und gekapselte Verbindung über den mindestens einen Server in dem Datenzentrum bereitgestellte Informationen ausgibt.

Eine weitere bevorzugte Ausführungsform betrifft ein System zur diskriminierungsfreien, sicheren und mobilen Bereitstellung digitaler Dienstleistungen eines Dienstleistungsanbieters über ein mobiles, manipulations- und diebstahlgesichertes Terminal an einen Benutzer umfassend
- ein mobiles, manipulations- und diebstahlgesichertes Terminal umfassend
   - ein versiegeltes Gehäuse,
   - ein Mobilfunkmodul mit einer eindeutigen Mobilfunkkennung und einer Geräteadresse, das so konfiguriert ist, dass es ausschließlich eine permanente, gesicherte, verschlüsselte, gekapselte und drahtlose Verbindung mit mindestens einem Server in einem Datenzentrum über einen privaten Zugangspunkt eingeht,
   - ein in das versiegelte Gehäuse integriertes Kartenlesemodul zum Auslesen von Smartcards und NFC-Karten,
   - ein Touchscreen zur Anzeige von Informationen an und zur Eingabe von Daten durch den Benutzer auf einer graphischen Benutzeroberfläche eines Anwendungsprogrammes,
   - ein Positionsbestimmungsmodul zur Bestimmung einer geographischen Position des Terminals,
- mindestens einen Server in einem Datenzentrum, der so konfiguriert ist, dass er die permanente, gesicherte, verschlüsselte und gekapselte Verbindung mit dem Terminal und den Betriebszustand des Terminals kontinuierlich überwacht,

wobei das Anwendungsprogramm und die graphische Benutzeroberfläche von einem auf dem mindestens einen Server in dem Datenzentrum laufenden Dienst auf dem Terminal bereitgestellt und kontrolliert werden;
wobei das Anwendungsprogramm so konfiguriert ist, dass es die während einer Sitzung eines Benutzers generierten Daten nach Beendigung der Sitzung löscht,
wobei das Anwendungsprogramm so konfiguriert ist, dass es das Terminal sperrt, wenn die vom Positionsbestimmungsmodul erfassten Positionsdaten außerhalb eines vordefinierten Bereichs liegen,
wobei der mindestens eine Server so konfiguriert ist, dass er auf dem Terminal erstellte, signierte und verschlüsselte Datenpakete über die permanente, gesicherte, verschlüsselte und gekapselte Verbindung empfängt und die Datenpakete über einen mandantenfähigen verschlüsselten VPN-Tunnel zu einem entfernten Netzwerk des Dienstleistungsanbieters komprimiert weitergibt
wobei die permanente, gesicherte, verschlüsselte, gekapselte und drahtlose Verbindung zwischen dem Terminal und dem mindestens einen Server nur aufgebaut wird, wenn die eindeutige Mobilfunkkennung des Mobilfunkmoduls mit einer auf dem mindestens einen Server hinterlegten, vordefinierten Mobilfunkkennung übereinstimmt und die Geräteadresse des Mobilfunkmoduls mit einer auf dem mindestens einen Server hinterlegten, vordefinierten Geräteadresse übereinstimmt, und
wobei die eindeutige Mobilfunkkennung die IMEI-Nummer des Mobilfunkmoduls ist und die Geräteadresse die MAC-Adresse ist.

Eine weitere bevorzugte Ausführungsform betrifft ein System zur diskriminierungsfreien, sicheren und mobilen Bereitstellung digitaler Dienstleistungen eines Dienstleistungsanbieters über ein mobiles, manipulations- und diebstahlgesichertes Terminal an einen Benutzer umfassend
- ein mobiles, manipulations- und diebstahlgesichertes Terminal umfassend
   - ein versiegeltes Gehäuse,
   - ein Mobilfunkmodul mit einer eindeutigen Mobilfunkkennung und einer Geräteadresse, das so konfiguriert ist, dass es ausschließlich eine permanente, gesicherte, verschlüsselte, gekapselte und drahtlose Verbindung mit mindestens einem Server in einem Datenzentrum über einen privaten Zugangspunkt eingeht,
   - ein in das versiegelte Gehäuse integriertes Kartenlesemodul zum Auslesen von Smartcards und NFC-Karten,
   - ein Touchscreen zur Anzeige von Informationen an und zur Eingabe von Daten durch den Benutzer auf einer graphischen Benutzeroberfläche eines Anwendungsprogrammes,
   - ein Positionsbestimmungsmodul zur Bestimmung einer geographischen Position des Terminals,
- mindestens einen Server in einem Datenzentrum, der so konfiguriert ist, dass er die permanente, gesicherte, verschlüsselte und gekapselte Verbindung mit dem Terminal und den Betriebszustand des Terminals kontinuierlich überwacht,
- eine Programmierschnittstelle über die der Dienstleistungsanbieter Funktionen auf dem mobilen Terminal des Benutzers aufrufen kann,

wobei das Anwendungsprogramm und die graphische Benutzeroberfläche von einem auf dem mindestens einen Server in dem Datenzentrum laufenden Dienst auf dem Terminal bereitgestellt und kontrolliert werden;
wobei das Anwendungsprogramm so konfiguriert ist, dass es die während einer Sitzung eines Benutzers generierten Daten nach Beendigung der Sitzung löscht,
wobei das Anwendungsprogramm so konfiguriert ist, dass es das Terminal sperrt, wenn die vom Positionsbestimmungsmodul erfassten Positionsdaten außerhalb eines vordefinierten Bereichs liegen,
wobei der mindestens eine Server so konfiguriert ist, dass er auf dem Terminal erstellte, signierte und verschlüsselte Datenpakete über die permanente, gesicherte, verschlüsselte und gekapselte Verbindung empfängt und die Datenpakete über einen mandantenfähigen verschlüsselten VPN-Tunnel zu einem entfernten Netzwerk des Dienstleistungsanbieters komprimiert weitergibt und
wobei die permanente, gesicherte, verschlüsselte, gekapselte und drahtlose Verbindung zwischen dem Terminal und dem mindestens einen Server nur aufgebaut wird, wenn die eindeutige Mobilfunkkennung des Mobilfunkmoduls mit einer auf dem mindestens einen Server hinterlegten, vordefinierten Mobilfunkkennung übereinstimmt und die Geräteadresse des Mobilfunkmoduls mit einer auf dem mindestens einen Server hinterlegten, vordefinierten Geräteadresse übereinstimmt.

Eine weitere bevorzugte Ausführungsform betrifft ein System zur diskriminierungsfreien, sicheren und mobilen Bereitstellung digitaler Dienstleistungen eines Dienstleistungsanbieters über ein mobiles, manipulations- und diebstahlgesichertes Terminal an einen Benutzer umfassend
- ein mobiles, manipulations- und diebstahlgesichertes Terminal umfassend
   - ein versiegeltes Gehäuse,
   - ein Mobilfunkmodul mit einer eindeutigen Mobilfunkkennung und einer Geräteadresse, das so konfiguriert ist, dass es ausschließlich eine permanente, gesicherte, verschlüsselte, gekapselte und drahtlose Verbindung mit mindestens einem Server in einem Datenzentrum über einen privaten Zugangspunkt eingeht,
   - ein in das versiegelte Gehäuse integriertes Kartenlesemodul zum Auslesen von Smartcards und NFC-Karten,
   - ein Touchscreen zur Anzeige von Informationen an und zur Eingabe von Daten durch den Benutzer auf einer graphischen Benutzeroberfläche eines Anwendungsprogrammes,
   - ein Positionsbestimmungsmodul zur Bestimmung einer geographischen Position des Terminals,
- mindestens einen Server in einem Datenzentrum, der so konfiguriert ist, dass er die permanente, gesicherte, verschlüsselte und gekapselte Verbindung mit dem Terminal und den Betriebszustand des Terminals kontinuierlich überwacht,
- eine Programmierschnittstelle über die der Dienstleistungsanbieter Funktionen auf dem mobilen Terminal des Benutzers aufrufen kann,

wobei das Anwendungsprogramm und die graphische Benutzeroberfläche von einem auf dem mindestens einen Server in dem Datenzentrum laufenden Dienst auf dem Terminal bereitgestellt und kontrolliert werden;
wobei das Anwendungsprogramm so konfiguriert ist, dass es die während einer Sitzung eines Benutzers generierten Daten nach Beendigung der Sitzung löscht,
wobei das Anwendungsprogramm so konfiguriert ist, dass es das Terminal sperrt, wenn die vom Positionsbestimmungsmodul erfassten Positionsdaten außerhalb eines vordefinierten Bereichs liegen,
wobei der mindestens eine Server so konfiguriert ist, dass er auf dem Terminal erstellte, signierte und verschlüsselte Datenpakete über die permanente, gesicherte, verschlüsselte und gekapselte Verbindung empfängt und die Datenpakete über einen mandantenfähigen verschlüsselten VPN-Tunnel zu einem entfernten Netzwerk des Dienstleistungsanbieters komprimiert weitergibt
wobei die permanente, gesicherte, verschlüsselte, gekapselte und drahtlose Verbindung zwischen dem Terminal und dem mindestens einen Server nur aufgebaut wird, wenn die eindeutige Mobilfunkkennung des Mobilfunkmoduls mit einer auf dem mindestens einen Server hinterlegten, vordefinierten Mobilfunkkennung übereinstimmt und die Geräteadresse des Mobilfunkmoduls mit einer auf dem mindestens einen Server hinterlegten, vordefinierten Geräteadresse übereinstimmt, und
wobei die über eine Programmierschnittstelle aufrufbare Funktion ausgewählt ist aus, Unterschriftenprozess starten, Smartcard einlesen, Dokument einscannen, Dokument verschlüsseln, Dokument senden, Dokument empfangen, Benutzer identifizieren, Foto vom Benutzer aufnehmen, Foto oder Scan vom Identifikationsdokument aufnehmen.

Eine weitere bevorzugte Ausführungsform betrifft ein System zur diskriminierungsfreien, sicheren und mobilen Bereitstellung digitaler Dienstleistungen eines Dienstleistungsanbieters über ein mobiles, manipulations- und diebstahlgesichertes Terminal an einen Benutzer umfassend
- ein mobiles, manipulations- und diebstahlgesichertes Terminal umfassend
   - ein versiegeltes Gehäuse,
   - ein Mobilfunkmodul mit einer eindeutigen Mobilfunkkennung und einer Geräteadresse, das so konfiguriert ist, dass es ausschließlich eine permanente, gesicherte, verschlüsselte, gekapselte und drahtlose Verbindung mit mindestens einem Server in einem Datenzentrum über einen privaten Zugangspunkt eingeht,
   - ein in das versiegelte Gehäuse integriertes Kartenlesemodul zum Auslesen von Smartcards und NFC-Karten,
   - ein Touchscreen zur Anzeige von Informationen an und zur Eingabe von Daten durch den Benutzer auf einer graphischen Benutzeroberfläche eines Anwendungsprogrammes,
   - ein Positionsbestimmungsmodul zur Bestimmung einer geographischen Position des Terminals,
- mindestens einen Server in einem Datenzentrum, der so konfiguriert ist, dass er die permanente, gesicherte, verschlüsselte und gekapselte Verbindung mit dem Terminal und den Betriebszustand des Terminals kontinuierlich überwacht,
- ein Web-Interface zum Administrieren des Terminals durch den Dienstleistungsanbieter, wobei der Zugriff auf das Web-Interface nur über den mandantenfähigen, verschlüsselten VPN-Tunnel zwischen dem Datenzentrum und dem Netzwerk des Dienstleistungsanbieters freigegeben ist,

wobei das Anwendungsprogramm und die graphische Benutzeroberfläche von einem auf dem mindestens einen Server in dem Datenzentrum laufenden Dienst auf dem Terminal bereitgestellt und kontrolliert werden;
wobei das Anwendungsprogramm so konfiguriert ist, dass es die während einer Sitzung eines Benutzers generierten Daten nach Beendigung der Sitzung löscht, wobei das Anwendungsprogramm so konfiguriert ist, dass es das Terminal sperrt, wenn die vom Positionsbestimmungsmodul erfassten Positionsdaten außerhalb eines vordefinierten Bereichs liegen,
wobei der mindestens eine Server so konfiguriert ist, dass er auf dem Terminal erstellte, signierte und verschlüsselte Datenpakete über die permanente, gesicherte, verschlüsselte und gekapselte Verbindung empfängt und die Datenpakete über einen mandantenfähigen verschlüsselten VPN-Tunnel zu einem entfernten Netzwerk des Dienstleistungsanbieters komprimiert weitergibt, und
wobei die permanente, gesicherte, verschlüsselte, gekapselte und drahtlose Verbindung zwischen dem Terminal und dem mindestens einen Server nur aufgebaut wird, wenn die eindeutige Mobilfunkkennung des Mobilfunkmoduls mit einer auf dem mindestens einen Server hinterlegten, vordefinierten Mobilfunkkennung übereinstimmt und die Geräteadresse des Mobilfunkmoduls mit einer auf dem mindestens einen Server hinterlegten, vordefinierten Geräteadresse übereinstimmt.

Eine weitere bevorzugte Ausführungsform betrifft ein System zur diskriminierungsfreien, sicheren und mobilen Bereitstellung digitaler Dienstleistungen eines Dienstleistungsanbieters über ein mobiles, manipulations- und diebstahlgesichertes Terminal an einen Benutzer umfassend
- ein mobiles, manipulations- und diebstahlgesichertes Terminal umfassend
   - ein versiegeltes Gehäuse,
   - ein Mobilfunkmodul mit einer eindeutigen Mobilfunkkennung und einer Geräteadresse, das so konfiguriert ist, dass es ausschließlich eine permanente, gesicherte, verschlüsselte, gekapselte und drahtlose Verbindung mit mindestens einem Server in einem Datenzentrum über einen privaten Zugangspunkt eingeht,
   - ein in das versiegelte Gehäuse integriertes Kartenlesemodul zum Auslesen von Smartcards und NFC-Karten,
   - ein Touchscreen zur Anzeige von Informationen an und zur Eingabe von Daten durch den Benutzer auf einer graphischen Benutzeroberfläche eines Anwendungsprogrammes,
   - ein Positionsbestimmungsmodul zur Bestimmung einer geographischen Position des Terminals,
- mindestens einen Server in einem Datenzentrum, der so konfiguriert ist, dass er die permanente, gesicherte, verschlüsselte und gekapselte Verbindung mit dem

Terminal und den Betriebszustand des Terminals kontinuierlich überwacht, wobei das Anwendungsprogramm und die graphische Benutzeroberfläche von einem auf dem mindestens einen Server in dem Datenzentrum laufenden Dienst auf dem Terminal bereitgestellt und kontrolliert werden;
wobei das Anwendungsprogramm so konfiguriert ist, dass es die während einer Sitzung eines Benutzers generierten Daten nach Beendigung der Sitzung löscht,
wobei das Anwendungsprogramm so konfiguriert ist, dass es das Terminal sperrt, wenn die vom Positionsbestimmungsmodul erfassten Positionsdaten außerhalb eines vordefinierten Bereichs liegen,
wobei der mindestens eine Server so konfiguriert ist, dass er auf dem Terminal erstellte, signierte und verschlüsselte Datenpakete über die permanente, gesicherte, verschlüsselte und gekapselte Verbindung empfängt und die Datenpakete über einen mandantenfähigen verschlüsselten VPN-Tunnel zu einem entfernten Netzwerk des Dienstleistungsanbieters komprimiert weitergibt,
wobei die permanente, gesicherte, verschlüsselte, gekapselte und drahtlose Verbindung zwischen dem Terminal und dem mindestens einen Server nur aufgebaut wird, wenn die eindeutige Mobilfunkkennung des Mobilfunkmoduls mit einer auf dem mindestens einen Server hinterlegten, vordefinierten Mobilfunkkennung übereinstimmt und die Geräteadresse des Mobilfunkmoduls mit einer auf dem mindestens einen Server hinterlegten, vordefinierten Geräteadresse übereinstimmt, und
wobei das integrierte Kartenlesemodul eine NFC-Einheit und eine Smartcard-Leseeinheit umfasst und konfiguriert ist, Smartcards, Chipkarten, Ausweisdokumente, Gesundheitskarten und Telematikkarten zu lesen.

In einer exemplarischen Ausführungsform ist das Terminal ein Tablet-Computergerät, in das wahlweise eine Kamera integriert ist. In einer exemplarischen Ausführungsform ist der Touchscreen konfiguriert, um einen Benutzer Bilder und Daten anzuzeigen und Eingaben vom Benutzer durch Kontakt durch den Benutzer (oder ein Werkzeug, wie zum Beispiel eine Schreibnadel, die vom Benutzer bedient wird) mit dem Touchscreen zu empfangen. Der berührungsempfindliche Touchscreen ist in der Lage, die Eingabe durch einen Benutzer zu erfassen, wenn der Benutzer den Touchscreen zum Beispiel mit einem Finger oder einer Schreibnadel berührt. Wie hierin exemplarisch offenbart, kann der Benutzer mit seinem Namen auf dem berührungsempfindlichen Touchscreen unterschreiben (zum Beispiel mit einer Schreibnadel oder einem Finger) und die Unterschrift des Benutzers kann in elektronischem Format erfasst und gespeichert werden (zum Beispiel als Bild). Beispielhaft kann eine integrierte Kamera verwendet werden, um digitale Fotos eines Gegenstands, wie zum Beispiel einer Identifikationskarte eines Patienten, dem Führerschein oder der Gesundheitskarte/den Gesundheitskarten zu machen. Zum Beispiel kann der Patient oder der Gesundheits-Dienstleister eine Karte vor die Kamera halten und den Auslöser drücken. Alternativ dazu kann das integrierte Kartenlesemodul verwendet werden, um die Karte zu scannen. Optische Zeichenerkennung oder Bilderkennungsverfahren, die im Anwendungsprogramm implementiert sind, das auf dem Tablet läuft, können zur Extraktion von Informationen von der Karte genutzt werden, und die Informationen können in ein elektronisches Format umgewandelt und in einzelnen Feldern gespeichert werden.

In einer exemplarischen Ausführungsform ist das Terminal konfiguriert, um eine elektronische Unterschrift zu erfassen. Das Terminal ist konfiguriert, um einen Unterschriftenblock auf dem Touchscreen anzuzeigen, wenn die Erfassung einer elektronischen Unterschrift erwünscht ist. Der Benutzer, zum Beispiel ein Patient, kann seine Unterschrift in dem Unterschriftenblock auf dem Touchscreen mit Hilfe einer Touchscreen-Schreibnadel eintragen. In einer exemplarischen Ausführungsform kann die Unterschrift des Benutzers in einem elektronischen Format erfasst und gespeichert werden (zum Beispiel als Bild).

Um eine Vielzahl von verschiedenen Identifikationsmitteln, wie Chipkarten, Smartcards oder Tokens zu erkennen ist das Kartenlesemodul (230) des erfindungsgemäßen Systems mit einer Nahfeldkommunikations-Einheit (235) und einer Smartcard-Leseeinheit (236) ausgestattet. Dadurch wird eine größtmögliche Kompatibilität zu den verschiedenen Standards und Formaten (Chipkarte vs. kontaktlos) bei der Identifikation des Benutzers und Authentifizierung gewährleistet.

Das Kartenlesemodul (230) ist somit speziell für den Einsatz im erfindungsgemäßen System (1) gestaltet, da es maßgeblich zur notwendigen Datensicherheit beiträgt und gleichzeitig die Bereitstellung digitaler Dienstleistungen aufgrund der größtmöglichen Kompatibilität zu den verschiedenen Standards und Formaten der Identifikationsmittel der Dienstleistungsanbieter vereinfacht.

In einer bevorzugten Ausführungsform des erfindungsgemäßen Systems (1) ist das Kartenlesemodul (230) so konfiguriert, dass es Smartcards, Chipkarten, Ausweisdokumente, Gesundheitskarten und Telematikkarten auslesen kann. In einer bevorzugten Ausführungsform des erfindungsgemäßen Systems (1) ist die Nahfeldkommunikations-Einheit (235) so konfiguriert, dass sie Smartcards, Chipkarten, Ausweisdokumente, Gesundheitskarten und Telematikkarten kontaktlos auslesen kann. In einer bevorzugten Ausführungsform des Kartenlesemoduls (230) umfasst die Smartcard-Leseeinheit (236) einen Chipkartenleser, der so konfiguriert, dass er Smartcards, Chipkarten, Ausweisdokumente, Gesundheitskarten und Telematikkarten auslesen kann.

In einer bevorzugten Ausführungsform des erfindungsgemäßen Systems (1) sind die Nahfeldkommunikations-Einheit (235) und die Smartcard-Leseeinheit (236) in das Kartenlesemodul (230) so integriert, dass das Kartenlesemodul (230) eine Einheit bildet, die in das versiegelte Gehäuse (210) des Terminals (200) integriert werden kann. In dieser Ausgestaltung bildet das Kartenlesemodul eine möglichst kompakte Bauform, die nicht oder nur unwesentlich vom Terminalgehäuse heraussteht.

Besonders vorteilhaft an der Vereinigung der Nahfeldkommunikations-Einheit (235) und der Smartcard-Leseeinheit (236) in einem Kartenlesemodul sind zudem die vereinfachte Steuerung und der vereinfachte Zugriff auf die Kartendaten durch das Anwendungsprogramm. Das Anwendungsprogramm muss nun nicht mehr für mehrere Kartenlesemodule (Modul für kontaktloses Kartenauslesen und Chipkartenmodul) programmiert, eingerichtet und gewartet werden, sondern es reicht, das Kartenlesemodul (230) zentral anzusprechen, um die verschiedenen Identifikationskarten unabhängig vom jeweiligen Standard und Format auszulesen. Dementsprechend ist das Anwendungsprogramm des erfindungsgemäßen Systems an das Kartenlesemodul (230) mit einer Nahfeldkommunikations-Einheit (235) und einer Smartcard-Leseeinheit (236) speziell angepasst.

### Figurenbeschreibung

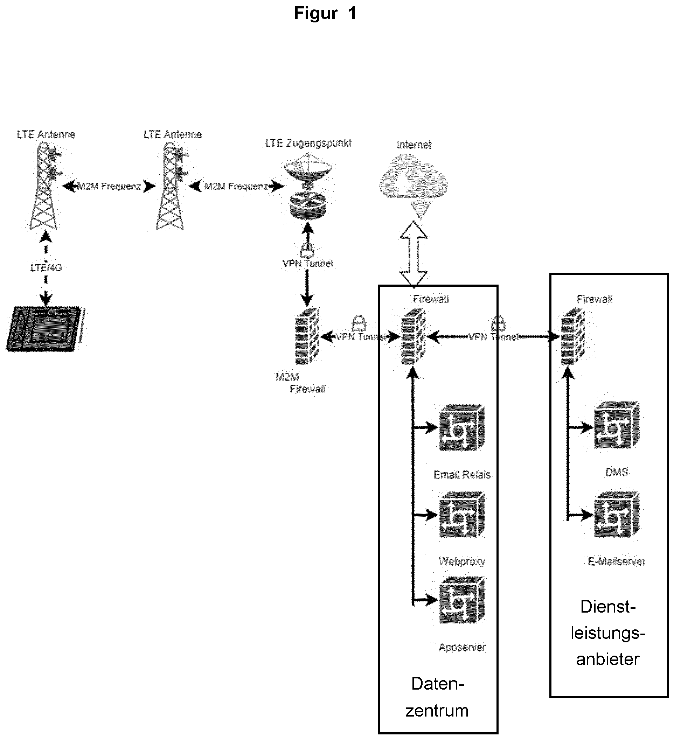

**Figur 1****:** Schema einer Ausführungsform des erfindungsgemäßen Systems.

### Beispiele

### Beispiel 1: Datenversand an einen Dienstleistungsanbieter

Ein System wie in Figur 1 abgebildet wird bereitgestellt. Für die gesicherte, Ende-zu-Ende-verschlüsselte Datenübertragung zwischen dem mobilen Terminal und dem Netzwerk des Dienstleistungsanbieters laufen folgende Schritte ab:
1. Authentifizierung des Benutzers am Terminal über Passworteingabe, biometrischer Erkennung (Iris oder Fingerabdruck) und/oder Auslesen einer Smartcard
2. Elektronische Gesundheitskarte (EGK) des Benutzers in Kontakt bringen mit dem Kartenleser. Eine Kommunikation zwischen dem Terminal und der EGK findet statt, um die Gültigkeit der EGK anhand der auf der EGK gespeicherten Daten festzustellen. Es findet kein Datenversand statt.
3. Datenversand
4. Daten werden lokal via SSL verschlüsselt.
5. Daten werden zur nächsten LTE-Antenne geschickt.
6. LTE-Antenne leitet Daten an einen privaten APN via gesonderte M2M Funkfrequenzen.
7. APN leitet die Daten zur Firewall des M2M Anbieters.
8. M2M-Anbieter leitet die Daten durch einen VPN-Tunnel zur Firewall des Datenzentrums.
9. Die Firewall im Datenzentrum leitet Daten zum Serververbund im Datenzentrum.
10. Verfügbarer Appserver empfängt die Daten.
11. Appserver komprimiert die Daten in das Format, das mit dem System des Dienstleistungsanbieters kompatibel ist.
12. Appserver schickt Daten zurück zur Firewall des Datenzentrums.
13. Die Firewall leitet die Daten durch einen verschlüsselten VPN-Tunnel zur Firewall des Dienstleistungsanbieters
14. Die Firewall des Dienstleistungsanbieters leitet die Daten an den DMS
15. Der DMS schickt eine Bestätigung über den Empfang der Daten zurück zur Firewall des Dienstleistungsanbieters.
16. Die Firewall schickt Daten durch den verschlüsselten VPN-Tunnel an die Firewall des Datenzentrums.
17. Die Firewall des Datenzentrums leitet die Daten an den Appserver.
18. Der Appserver empfängt die Bestätigung und leitet sie weiter
19. Die Firewall leitet die Bestätigung durch einen verschlüsselten VPN-Tunnel zur Firewall des M2M Anbieter
20. Firewall des M2M Anbieters leitet die Bestätigung an den privaten M2M APN
21. APN leitet die Bestätigung weiter an die LTE-Antenne.
22. LTE-Antenne leitet die Bestätigung an das Terminal
23. Das Terminal zeigt dem Benutzer an, ob der Echtzeit-Versand erfolgreich war.

### Beispiel 2: E-Mail-Versand an Dienstleistungsanbieter via VPN

Ein System wie in Figur 1 abgebildet wird bereitgestellt. Für den gesicherten E-Mail-Verkehr zwischen dem erfindungsgemäßen System und dem Dienstleistungsanbieter laufen folgende Schritte ab:
1. Appserver im Datenzentrum generiert eine E-Mail
2. Der Appserver sendet E-Mail an das E-Mail-Relais im Datenzentrum.
3. E-Mail-Relais leitet E-Mail an die Firewall des Datenzentrums.
4. Die Firewall leitet die E-Mail durch den verschlüsselten VPN-Tunnel an die Firewall des Dienstleistungsanbieters.
5. Die Firewall leitet die E-Mail an den E-Mail-Server des Dienstleistungsanbieters.
6. Der E-Mail-Server speichert die E-Mail im entsprechenden Postfach.

### Beispiel 3: Kommunikation mit externen Servern über eine Programmierschnittstelle (API)

Ein System wie in Figur 1 abgebildet wird bereitgestellt. Für die Kommunikation mit einem externen Server über eine Programmierschnittstelle umfasst das erfindungsgemäße System eine Programmierschnittstelle. Es laufen folgende Schritte ab:
1. Das Terminal ruft eine Funktion auf, die eine Anfrage auslöst
2. Die Anfrage wird via LTE/M2M und VPN-Tunnel an den Web Proxy Server im Datenzentrum weitergeleitet
3. Der Web Proxy Server sendet die Anfrage an das Ziel im Internet.
4. Das Ziel im Internet verarbeitet die Anfrage und schickt die Antwort an den Web Proxy Server im Datenzentrum.
5. Der Web Proxy Server leitet die Antwort weiter an das Terminal via VPN-Tunnel und LTE/M2M.

### Referenzzeichenliste:

- 1: System
- 100: Dienstleistungsanbieter
- 150: Netzwerk
- 160: Web-Interface

- 200: mobiles, manipulations- und diebstahlgesichertes Terminal
- 201: Tablet
- 202: Ständer
- 203: Ladevorrichtung
- 205: ein oder mehrere elektrische Energiespeicher
- 210: versiegeltes Gehäuse
- 220: Mobilfunkmodul
- 221: eindeutige Mobilfunkkennung
- 222: Geräteadresse
- 230: integriertes Kartenlesemodul
- 231: Smartcard
- 232: NFC-Karte
- 235: NFC-Einheit
- 236: Smartcard-Leseeinheit
- 240: Touchscreen
- 250: Positionsbestimmungsmodul
- 251: Positionsdaten
- 260: integrierte Kamera
- 265: integrierter Lautsprecher
- 266: integriertes Mikrofon

- 300: Benutzer
- 400: Anwendungsprogramm
- 410: grafische Benutzeroberfläche
- 450: Programmierschnittstelle

- 500: Verbindung zwischen Terminal (200) und Datenzentrum (600)
- 510: privater Zugangspunkt
- 511: Verbindung zwischen Terminal (200) und privaten Zugangspunkt (510)
- 512: Verbindung zwischen privaten Zugangspunkt (510) und Datenzentrum (600)
- 520: Datenpaket
- 530,535: VPN-Tunnel

- 600: Datenzentrum
- 610: mindestens ein Server
- 611: Firewall
- 612: App-Server
- 613: Web-Proxy-Server
- 614: E-Mail-Relais-Server
- 650: Dienst

## Patentansprüche

1. Ein System (1) zur diskriminierungsfreien, sicheren und mobilen Bereitstellung digitaler Dienstleistungen eines Dienstleistungsanbieters (100) über ein mobiles, manipulations- und diebstahlgesichertes Terminal (200) an einen Benutzer (300) umfassend
- ein mobiles, manipulations- und diebstahlgesichertes Terminal (200) umfassend
- ein versiegeltes Gehäuse (210),
- ein Mobilfunkmodul (220) mit einer eindeutigen Mobilfunkkennung (221) und einer Geräteadresse (222), das so konfiguriert ist, dass es ausschließlich eine permanente, gesicherte, verschlüsselte, gekapselte und drahtlose Verbindung (500) mit mindestens einem Server (610) in einem Datenzentrum (600) über einen privaten Zugangspunkt (510) eingeht,
- ein in das versiegelte Gehäuse (210) integriertes Kartenlesemodul (230) zum Auslesen von Smartcards (231) und NFC-Karten (232),
- ein Touchscreen (240) zur Anzeige von Informationen an und zur Eingabe von Daten durch den Benutzer auf einer graphischen Benutzeroberfläche (410) eines Anwendungsprogrammes (400),
- ein Positionsbestimmungsmodul (250) zur Bestimmung einer geographischen Position des Terminals (200),
- mindestens einen Server (610) in einem Datenzentrum (600), der so konfiguriert ist, dass er die permanente, gesicherte, verschlüsselte und gekapselte Verbindung (500) mit dem Terminal (200) und den Betriebszustand des Terminals (200) kontinuierlich überwacht,
wobei das Anwendungsprogramm (400) und die graphische Benutzeroberfläche (410) von einem auf dem mindestens einen Server (610) in dem Datenzentrum (600) laufenden Dienst (650) auf dem Terminal (200) bereitgestellt und kontrolliert werden;
wobei das Anwendungsprogramm (400) so konfiguriert ist, dass es die während einer Sitzung eines Benutzers (300) generierten Daten nach Beendigung der Sitzung löscht,
wobei das Anwendungsprogramm (400) so konfiguriert ist, dass es das Terminal (200) sperrt, wenn die vom Positionsbestimmungsmodul (250) erfassten Positionsdaten (251) außerhalb eines vordefinierten Bereichs liegen,
wobei der mindestens eine Server (610) so konfiguriert ist, dass er auf dem Terminal (200) erstellte, signierte und verschlüsselte Datenpakete (520) über die permanente, gesicherte, verschlüsselte und gekapselte Verbindung (500) empfängt und die Datenpakete (520) über einen mandantenfähigen verschlüsselten VPN-Tunnel (530) zu einem entfernten Netzwerk (150) des Dienstleistungsanbieters (100) komprimiert weitergibt und
wobei die permanente, gesicherte, verschlüsselte, gekapselte und drahtlose Verbindung (500) zwischen dem Terminal (200) und dem mindestens einen Server (610) nur aufgebaut wird, wenn die eindeutige Mobilfunkkennung (221) des Mobilfunkmoduls (220) mit einer auf dem mindestens einen Server (610) hinterlegten, vordefinierten Mobilfunkkennung übereinstimmt und die Geräteadresse (222) des Mobilfunkmoduls (220) mit einer auf dem mindestens einen Server (610) hinterlegten, vordefinierten Geräteadresse übereinstimmt.

2. Das System (1) gemäß Anspruch 1, wobei der mindestens eine Server (610) im Datenzentrum (600) eine Firewall (611), einen App-Server (612), einen Web-Proxy-Server (613) und einen E-Mail-Relais-Server (614) umfasst.

3. Das System (1) gemäß Anspruch 1 oder 2, wobei die Verbindung (512) zwischen dem privaten Zugangspunkt und dem Datenzentrum über einen VPN-Tunnel (535) erfolgt.

4. Das System (1) gemäß einem der Ansprüche 1 bis 3, wobei das mobile, manipulations- und diebstahlgesicherte Terminal (200) ferner eine integrierte Kamera (260) zur Aufnahme von Videos und Bildern und zum Scannen von Dokumenten und integrierte Lautsprecher (265) umfasst.

5. Das System (1) gemäß einem der Ansprüche 1 bis 4, wobei das Anwendungsprogramm (400) des mobilen Terminals (200) in einem Mehrbenutzer-Kioskmodus läuft.

6. Das System (1) gemäß einem der Ansprüche 1 bis 5, wobei das Terminal (200) über den Touchscreen (240) Unterschriften erfassen kann.

7. Das System (1) gemäß einem der Ansprüche 1 bis 6, wobei das Terminal (200) ein Tablet (201) ist.

8. Das System (1) gemäß Anspruch 7, wobei das Tablet (201) in einem Ständer (202) umfassend eine Ladevorrichtung (203) angeordnet ist und ein oder mehrere elektrische Energiespeicher (205) des Tablets mittels der Ladevorrichtung (203) induktiv oder direkt mit einem angeschlossenen Kabel aufgeladen wird.

9. Das System (1) gemäß einem der Ansprüche 1 bis 8, wobei das Anwendungsprogramm (400) so konfiguriert ist, dass es auf dem Touchscreen (240) des Terminals (200) bei Nichtbenutzung durch einen Benutzer (300) vom Dienstleistungsanbieter (100) durch die permanente, gesicherte, verschlüsselte und gekapselte Verbindung (500) über den mindestens einen Server (610) in dem Datenzentrum (600) bereitgestellte Informationen wiedergibt.

10. Das System (1) gemäß einem der Ansprüche 1 bis 9, wobei die eindeutige Mobilfunkkennung (221) die IMEI-Nummer des Mobilfunkmoduls (220) ist.

11. Das System (1) gemäß einem der Ansprüche 1 bis 10, ferner umfassend eine Programmierschnittstelle (450) über die der Dienstleistungsanbieter (100) Funktionen auf dem mobilen Terminal (200) des Benutzers (300) aufrufen kann.

12. Das System (1) gemäß Anspruch 11, wobei die über eine Programmierschnittstelle (450) aufrufbare Funktion ausgewählt ist aus, Unterschriftenprozess starten, SmartCard einlesen, Dokument einscannen, Dokument verschlüsseln, Dokument senden, Dokument empfangen, Benutzer identifizieren, Foto vom Benutzer aufnehmen, Foto oder Scan vom Identifikationsdokument aufnehmen.

13. Das System (1) gemäß einem der Ansprüche 1 bis 12, ferner umfassend ein Web-Interface (160) zum Administrieren des Terminals (200) durch den Dienstleistungsanbieter (100), wobei der Zugriff auf das Web-Interface (160) nur über den mandantenfähigen, verschlüsselten VPN-Tunnel (530) zwischen dem Datenzentrum (600) und dem Netzwerk (150) des Dienstleistungsanbieters (100) freigegeben ist.

14. Das System (1) gemäß einem der Ansprüche 1 bis 13, wobei das integrierte Kartenlesemodul (230) eine NFC-Einheit (235) und eine Smartcard-Leseeinheit (236) umfasst und konfiguriert ist, SmartCards, Chipkarten, Ausweisdokumente, Gesundheitskarten und Telematikkarten zu lesen.

## Claims

1. A system (1) for the non-discriminatory, secure and mobile provision of digital services of a service provider (100) to a user (300) via a mobile, tamper-proof and theft-protected terminal (200), comprising:
• a mobile, tamper-proof and theft-protected terminal (200) comprising
∘ a sealed housing (210),
∘ a cellular module (220) with a unique cellular identifier (221) and a device address (222), configured to establish exclusively a permanent, secure, encrypted, encapsulated and wireless connection (500) with at least one server (610) in a data center (600) via a private access point (510),
∘ a card reader module (230) integrated into the sealed housing (210) for reading smart cards (231) and NFC cards (232),
∘ a touchscreen (240) for displaying information to and receiving input from the user on a graphical user interface (410) of an application program (400),
∘ a positioning module (250) for determining a geographical position of the terminal (200),
• at least one server (610) in a data center (600), configured to continuously monitor the permanent, secure, encrypted and encapsulated connection (500) with the terminal (200) and the operating status of the terminal (200),
wherein the application program (400) and the graphical user interface (410) are provided and controlled on the terminal (200) by a service (650) running on the at least one server (610) in the data center (600);
wherein the application program (400) is configured to delete the data generated during a session by a user (300) after the session has ended;
wherein the application program (400) is configured to lock the terminal (200) if the position data (251) detected by the positioning module (250) lies outside a predefined range;
wherein the at least one server (610) is configured to receive signed and encrypted data packets (520) created on the terminal (200) via the permanent, secure, encrypted and encapsulated connection (500) and to forward the data packets (520), in compressed form, via a multi-tenant encrypted VPN tunnel (530) to a remote network (150) of the service provider (100);
and wherein the permanent, secure, encrypted, encapsulated and wireless connection (500) between the terminal (200) and the at least one server (610) is established only if the unique cellular identifier (221) of the cellular module (220) matches a predefined identifier stored on the at least one server (610) and the device address (222) of the cellular module (220) matches a predefined device address stored on the at least one server (610).

2. The system (1) according to claim 1, wherein the at least one server (610) in the data center (600) comprises a firewall (611), an application server (612), a web proxy server (613), and an email relay server (614).

3. The system (1) according to claim 1 or 2, wherein the connection (512) between the private access point (510) and the data center (600) is established via a VPN tunnel (535).

4. The system (1) according to any one of claims 1 to 3, wherein the mobile terminal (200) further comprises an integrated camera (260) for capturing images and videos and scanning documents, and integrated speakers (265).

5. The system (1) according to any one of claims 1 to 4, wherein the application program (400) of the mobile terminal (200) runs in a multi-user kiosk mode.

6. The system (1) according to any one of claims 1 to 5, wherein the terminal (200) is configured to capture signatures via the touchscreen (240).

7. The system (1) according to any one of claims 1 to 6, wherein the terminal (200) is a tablet (201).

8. The system (1) according to claim 7, wherein the tablet (201) is positioned in a stand (202) comprising a charging device (203) and one or more electrical energy storage units (205) of the tablet can be charged inductively or directly by means of the charging device (203) via a cable.

9. The system (1) according to any one of claims 1 to 8, wherein the application program (400) is configured to display, on the touchscreen (240) of the terminal (200) when not in use by a user (300), information provided by the service provider (100) via the permanent, secure, encrypted, and encapsulated connection (500) through the at least one server (610) in the data center (600).

10. The system (1) according to any one of claims 1 to 9, wherein the unique cellular identifier (221) is the IMEI number of the cellular module (220).

11. The system (1) according to any one of claims 1 to 10, further comprising an application programming interface (API) (450) through which the service provider (100) can invoke functions on the mobile terminal (200) of the user (300).

12. The system (1) according to claim 11, wherein the functions accessible via the application programming interface (450) are selected from: starting a signature process, reading a smart card, scanning a document, encrypting a document, sending a document, receiving a document, identifying a user, capturing a photo of the user, and capturing a photo or scan of an identification document.

13. The system (1) according to any one of claims 1 to 12, further comprising a web interface (160) for administering the terminal (200) by the service provider (100), wherein access to the web interface (160) is permitted only via the multi-tenant encrypted VPN tunnel (530) between the data center (600) and the network (150) of the service provider (100).

14. The system (1) according to any one of claims 1 to 13, wherein the card reader module (230) comprises an NFC unit (235) and a smart card reader unit (236), and is configured to read smart cards, chip cards, identification documents, health cards, and telematics cards.

## Revendications

1. Système (1) destiné à la fourniture non discriminatoire, sécurisée et mobile de services numériques d'un prestataire de services (100) à un utilisateur (300) via un terminal mobile (200) inviolable et protégé contre le vol, comprenant :
• un terminal mobile (200) inviolable et protégé contre le vol comprenant
∘ un boîtier scellé (210),
∘ un module cellulaire (220) comportant un identifiant cellulaire unique (221) et une adresse de dispositif (222), configuré pour établir exclusivement une connexion permanente, sécurisée, chiffrée, encapsulée et sans fil (500) avec au moins un serveur (610) dans un centre de données (600) via un point d'accès privé (510),
∘ un module lecteur de cartes (230) intégré dans le boîtier scellé (210) pour lire des cartes à puce (231) et des cartes NFC (232),
∘ un écran tactile (240) pour afficher des informations à l'utilisateur et recevoir des entrées de celui-ci via une interface utilisateur graphique (410) d'un programme applicatif (400),
∘ un module de positionnement (250) pour déterminer la position géographique du terminal (200),
• au moins un serveur (610) dans un centre de données (600), configuré pour surveiller en continu la connexion permanente, sécurisée, chiffrée et encapsulée (500) avec le terminal (200) ainsi que l'état de fonctionnement du terminal (200),
**caractérisé en ce que** le programme applicatif (400) et l'interface utilisateur graphique (410) sont fournis et contrôlés sur le terminal (200) par un service (650) exécuté sur ledit au moins un serveur (610) dans le centre de données (600);
**en ce que** le programme applicatif (400) est configuré pour supprimer les données générées pendant une session utilisateur après la fin de ladite session;
**en ce que** le programme applicatif (400) est configuré pour verrouiller le terminal (200) si les données de position (251) détectées par le module de positionnement (250) se trouvent en dehors d'une plage prédéfinie;
**en ce que** ledit au moins un serveur (610) est configuré pour recevoir des paquets de données (520) signés et chiffrés, créés sur le terminal (200), via la connexion permanente, sécurisée, chiffrée et encapsulée (500), et pour transférer lesdits paquets de données (520), sous forme compressée, via un tunnel VPN chiffré multi-locataires (530) vers un réseau distant (150) du prestataire de services (100);
et **en ce que** la connexion permanente, sécurisée, chiffrée, encapsulée et sans fil (500) entre le terminal (200) et ledit au moins un serveur (610) n'est établie que si l'identifiant cellulaire unique (221) correspond à un identifiant prédéfini enregistré sur ledit au moins un serveur (610) et si l'adresse de dispositif (222) correspond à une adresse prédéfinie enregistrée sur ledit au moins un serveur (610).

2. Système (1) selon la revendication 1, dans lequel ledit au moins un serveur (610) dans le centre de données (600) comprend un pare-feu (611), un serveur applicatif (612), un serveur proxy web (613) et un serveur relais de messagerie (614).

3. Système (1) selon la revendication 1 ou 2, dans lequel la connexion (512) entre le point d'accès privé (510) et le centre de données (600) est établie via un tunnel VPN (535).

4. Système (1) selon l'une quelconque des revendications 1 à 3, dans lequel le terminal mobile (200) comprend en outre une caméra intégrée (260) pour la capture d'images et de vidéos ainsi que pour la numérisation de documents, et des haut-parleurs intégrés (265).

5. Système (1) selon l'une quelconque des revendications 1 à 4, dans lequel le programme applicatif (400) fonctionne en mode kiosque multi-utilisateur.

6. Système (1) selon l'une quelconque des revendications 1 à 5, dans lequel le terminal (200) est configuré pour capturer des signatures via l'écran tactile (240).

7. Système (1) selon l'une quelconque des revendications 1 à 6, dans lequel le terminal (200) est une tablette (201).

8. Système (1) selon la revendication 7, dans lequel la tablette (201) est disposée dans un support (202) comprenant un dispositif de charge (203), et dans lequel une ou plusieurs unités de stockage d'énergie électrique (205) de la tablette peuvent être chargées soit par induction soit directement via un câble.

9. Système (1) selon l'une quelconque des revendications 1 à 8, dans lequel le programme applicatif (400) est configuré pour afficher, sur l'écran tactile (240) du terminal (200) lorsqu'il n'est pas utilisé par un utilisateur (300), des informations fournies par le prestataire de services (100) via la connexion permanente, sécurisée, chiffrée et encapsulée (500) par l'intermédiaire dudit au moins un serveur (610) dans le centre de données (600).

10. Système (1) selon l'une quelconque des revendications 1 à 9, dans lequel l'identifiant cellulaire unique (221) est le numéro IMEI du module cellulaire (220).

11. Système (1) selon l'une quelconque des revendications 1 à 10, comprenant en outre une interface de programmation d'application (450) par laquelle le prestataire de services (100) peut appeler des fonctions sur le terminal mobile (200) de l'utilisateur (300).

12. Système (1) selon la revendication 11, dans lequel les fonctions accessibles via l'interface de programmation (450) comprennent : le démarrage d'un processus de signature, la lecture d'une carte à puce, la numérisation d'un document, le chiffrement d'un document, l'envoi d'un document, la réception d'un document, l'identification d'un utilisateur, la capture d'une photo de l'utilisateur, et la capture d'une photo ou d'un scan d'un document d'identification.

13. Système (1) selon l'une quelconque des revendications 1 à 12, comprenant en outre une interface web (160) permettant l'administration du terminal (200) par le prestataire de services (100), l'accès à ladite interface web (160) n'étant autorisé que via le tunnel VPN chiffré multi-locataires (530) entre le centre de données (600) et le réseau (150) du prestataire de services (100).

14. Système (1) selon l'une quelconque des revendications 1 à 13, dans lequel le module lecteur de cartes (230) comprend une unité NFC (235) et une unité de lecture de cartes à puce (236) et est configuré pour lire des cartes à puce, des cartes à circuit intégré, des documents d'identité, des cartes de santé et des cartes de télématique.
